(19) Europäisches Patentamt
European Patent Office
Office européen des brevets

(11) **EP 4 750 110 A1**

(12) **EUROPEAN PATENT APPLICATION**
published in accordance with Art. 153(4) EPC

(43) Date of publication:
**27.05.2026 Bulletin 2026/22**

(21) Application number: **23945470.5**

(22) Date of filing: **19.07.2023**

(51) International Patent Classification (IPC):
***H04W 12/04*** *(2021.01)*    ***H04W 12/73*** *(2021.01)*
***H04W 72/23*** *(2023.01)*    ***H04W 36/00*** *(2009.01)*

(52) Cooperative Patent Classification (CPC):
**H04W 12/73; H04W 12/041; H04W 12/0433;
H04W 36/0038; H04W 72/23; H04W 36/0069**

(86) International application number:
**PCT/CN2023/108262**

(87) International publication number:
**WO 2025/015580 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **XIONG, Yi
Beijing 100085 (CN)**

(74) Representative: **Dehns Germany Partnerschaft
mbB
Theresienstraße 6-8
80333 München (DE)**

(54) **INFORMATION PROCESSING METHOD, TERMINAL, COMMUNICATION SYSTEM, AND STORAGE MACHINE**

(57) Embodiments of the present disclosure provide an information processing method, a terminal, a communication system, and a storage medium. The information processing method comprises : a network device sending first information, the first information being used by a terminal to determine a key. Thus, the first information can be sent to the terminal by means of the network, enabling the terminal to accurately determine the key.

```
  ┌─────────────────┐                              ┌─────────────────┐
  │ Network device  │                              │    Terminal     │
  └────────┬────────┘                              └────────┬────────┘
           │    S2101, sending first information            │
           │ ─────────────────────────────────────────────▶│
           │ (configuration information, indication information)
           │                                    ┌───────────┴────────────┐
           │                                    │ S2102, performing a     │
           │                                    │ first operation         │
           │                                    └───────────┬────────────┘
           │                                    ┌───────────┴────────────┐
           │                                    │ S2103, determining a    │
           │                                    │ key-related operation   │
           │                                    └───────────┬────────────┘
           │                                                │
```

FIG. 2

Description

## TECHNICAL FIELD

The present disclosure relates to the field of communication technology, and in particular to an information processing method, a terminal, a communication system, and a storage medium.

## BACKGROUND

In dual connectivity, User Equipment (UE) can simultaneously access two cells or two cell groups. These two cell groups are the Master Cell Group (MCG) and the Secondary Cell Group (SCG). Within the MCG, there may be multiple cells, one of which is configured to initiate initial access; this cell is called the Primary Cell (PCell). As the name suggests, the PCell is the most "primary" cell in the MCG. The PCell in the MCG and the Secondary Cell (SCell) in the MCG are combined through Carrier Aggregation (CA). In the MCG, the Primary Cell is the PCell, and the Secondary Cell is the SCell; in the SCG, the Primary Secondary Cell is the PSCell, and the Secondary Cell is the SCell.

## SUMMARY

The present disclosure addresses the problem of determining the key for a terminal performing mobility operations.

The present disclosure provides an information processing method, a terminal, a communication system, and a storage medium.

According to a first aspect of embodiments of the present disclosure, an information processing method is provided, including: a network device sending first information, where the first information is used by a terminal to determine a key-related operation.

According to a second aspect of embodiments of the present disclosure, an information processing method is provided, including: a terminal receiving first information; and determining a key-related operation based on the first information.

According to a third aspect of embodiments of the present disclosure, an information processing method is provided, including: a network device sending first information to a terminal; and the terminal determining a key-related operation based on the first information.

According to a fourth aspect of embodiments of the present disclosure, a network device is provided, including: a first transceiver module configured to send first information, where the first information is used by a terminal to determine a key-related operation.

According to a fifth aspect of embodiments of the present disclosure, a terminal is provided, including:

  a second transceiver module configured to receive first information; and
  a processing module configured to determine a key-related operation based on the first information.

According to a sixth aspect of embodiments of the present disclosure, a network device is provided, including one or more processors, where the network device is configured to perform an optional implementation of the first aspect.

According to a seventh aspect of embodiments of the present disclosure, a terminal is provided, including: one or more processors; where the terminal is configured to perform an optional implementation of the second aspect.

According to an eighth aspect of the present disclosure, a communication system is provided, including a network device and a terminal, where the network device is configured to perform the method described in the optional implementation of the first aspect, and the terminal is configured to perform the method described in the optional implementation of the second aspect.

According to a ninth aspect of embodiments of the present disclosure, a storage medium is provided, the storage medium storing instructions that, when executed on a communication device, cause the communication device to perform the method described in the first aspect, the second aspect, the third aspect, or optional implementations of the first aspect, the second aspect, and the third aspect.

The embodiments of the present disclosure can solve the problem of determining the key for a terminal to perform mobility operations.

BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure and do not impose specific limitations on the scope of protection of the present disclosure.

FIG. 1A is a schematic structural diagram of an information processing system according to an embodiment of the present disclosure.

FIG. 1B is a schematic architecture diagram of an E-UTRA-NR dual-connectivity according to an embodiment of the present disclosure.

FIG. 1C is a schematic architecture diagram of an NR-DC according to an embodiment of the present disclosure.

FIG. 1D is a schematic diagram of a dual-connectivity according to an embodiment of the present disclosure.

FIG. 1E is a schematic diagram of an information unit according to an embodiment of the present disclosure.

FIG. 1F is a schematic diagram of an information unit according to an embodiment of the present disclosure.

FIG. 1G is a schematic diagram of an information unit according to an embodiment of the present disclosure.

FIG. 1H is a schematic diagram of an information unit according to an embodiment of the present disclosure.

FIG. 2 is an interactive schematic diagram of an information processing method according to an embodiment of the present disclosure.

FIG. 3A is a flowchart of an information processing method according to an embodiment of the present disclosure.

FIG. 3B is a flowchart of an information processing method according to an embodiment of the present disclosure.

FIG. 4A is a schematic flowchart illustrating an information processing method according to an embodiment of the present disclosure.

FIG. 4B is a schematic flowchart illustrating an information processing method according to an embodiment of the present disclosure.

FIG. 4C is a schematic flowchart illustrating an information processing method according to an embodiment of the present disclosure.

FIG. 4D is a schematic flowchart illustrating an information processing method according to an embodiment of the present disclosure.

FIG. 5 is a schematic flowchart illustrating an information processing method according to an embodiment of the present disclosure.

FIG. 6 is a schematic flowchart illustrating an information processing method according to an embodiment of the present disclosure.

FIG. 7A is a schematic structural diagram of a first device according to an embodiment of the present disclosure.

FIG. 7B is a schematic structural diagram of a second device according to an embodiment of the present disclosure.

FIG. 8A is a schematic structural diagram of a communication device provided according to an embodiment of the present disclosure.

FIG. 8B is a schematic structural diagram of a chip provided according to an embodiment of the present disclosure.

## DETAILED DESCRIPTION

The embodiments of the present disclosure provide an information processing method, a terminal, a communication system, and a storage medium.

In a first aspect, the embodiments of the present disclosure provide an information processing method, including: a network device sending first information, where the first information is used by a terminal to determine a key-related operation.

In the above embodiments, the network device can send the first information to the terminal, enabling the terminal to accurately determine the key-related operation, thereby improving secure communication between the network device and the terminal.

In combination with some embodiments of the first aspect, in some embodiments, the key-related operation includes at least one of:

whether to update the key;
generating a key.

In the above embodiments, the terminal can accurately determine whether to update the key using the first information, and/or can accurately generate a key using the first information, thereby improving security between the network device and the terminal.

In combination with some embodiments of the first aspect, in some embodiments, the first information being used by the terminal to determine the key-related operation includes at least one of:

the first information is used by the terminal to determine the key-related operation during a mobility operation; or
the first information is used by the terminal to determine the key-related operation after a mobility operation.

In the above embodiments, the terminal can accurately determine whether a key update is needed during and/or after the mobility operation, or accurately determine the generated key. This allows the terminal to regenerate the key in mobile scenarios, eliminating the need to reuse the previous key; thus improving security between the terminal and network devices in mobile scenarios.

In combination with some embodiments of the first aspect, in some embodiments, the key is a key corresponding to the secondary node (SN).

In the above embodiments, the security key of the secondary node can be accurately determined.

In combination with some embodiments of the first aspect, in some embodiments, the mobility operation includes at least one of:

Conditional Handover (CHO);
Conditional PSCell Addition or Change (CPAC), where CPAC includes Conditional PSCell Addition (CPA) and/or Conditional PSCell Change (CPC);
Subsequent CHO;
Subsequent CPAC, wherein Subsequent CPAC includes Subsequent CPA and/or Subsequent CPC;
L1/L2-Triggered Mobility (LTM) for a Primary Cell (PCell) or a Master Cell Group (MCG), where the LTM includes an initial LTM and/or a subsequent LTM;
LTM for a primary secondary cell (PSCell) or a secondary cell group (SCG), where the LTM includes an initial LTM and/or a subsequent LTM.

In the above embodiments, the key can be accurately determined when the terminal performs at least one of the following mobility operations: CHO, CPAC, subsequent CHP, subsequent CPAC, LTM for a primary cell or a master cell group, and LTM for a primary secondary cell or a secondary cell group.

In combination with some embodiments of the first aspect, in some embodiments, sending first information includes sending Radio Resource Control (RRC) signaling, where the RRC signaling carries the first information.

In the above embodiments, the RRC signaling can be multiplexed to send the first information, thereby improving the utilization rate of RRC signaling and saving signaling overhead.

In combination with some embodiments of the first aspect, in some embodiments, the first information includes configuration information, where the configuration information is used to configure a first identifier set; where the first identifier set is configured to identify a set of count values, the count values are values of counters; the values of the counters are configured to generate a key corresponding to the SN.

In the above embodiments, the first identifier set configured to generate the key can be sent to the terminal, which helps the terminal determine whether the first identifier set of the SN to be switched to has changed from the current first identifier set, thereby determining whether to update the key and/or accurately generate the key based on the first identifier set.

In combination with some embodiments of the first aspect, in some embodiments, the configuration information includes at least one of:

an index and a first identifier set corresponding to the index;
an index, an SN identifier and a first identifier set corresponding to the index; the SN identifier is configured to identify a candidate SN;
an SN identifier and a first identifier set corresponding to the SN identifier.

In the above embodiments, multiple methods for the network device to configure the first identifier set for the terminal are provided, which is beneficial for adapting to more application scenarios. Furthermore, one first identifier set can correspond to one index, and one index corresponds to one candidate SN, thus allowing configuration of the first identifier set of at least one candidate SN for the terminal; this helps the terminal determine whether the first identifier set in the current SN has changed.

In combination with some embodiments of the first aspect, in some embodiments, sending the first information includes one of:

sending at least one conditional reconfiguration configuration, where each conditional reconfiguration configuration carries first information, and the first information includes a first identifier set corresponding to the conditional reconfiguration configuration; where the conditional reconfiguration configuration is a mobility operation configuration;
sending multiple conditional reconfiguration configurations, where a first conditional reconfiguration configuration in the multiple conditional reconfiguration configurations carries the first information, the first information includes a first identifier set corresponding to the first conditional reconfiguration configuration; at least one second conditional reconfiguration configuration in the multiple conditional reconfiguration configurations carries the first information, the first information includes an SN identifier, an index, and/or a first configuration identifier; the first configuration identifier is configured to indicate the first conditional reconfiguration configuration; the second conditional reconfiguration configuration and the first conditional reconfiguration configuration are associated with the same candidate SN.

**In** the above embodiments, the first information, including a first identifier set, etc., can be sent through the conditional reconfiguration configuration. This conditional reconfiguration configuration can also be used for mobility operation configuration, thus enabling the conditional reconfiguration configuration to have two functions: indicating the first identifier set and configuring for mobility operation, without the need for additional signaling to send the first identifier set, thereby reducing signaling overhead.

Furthermore, if each conditional reconfiguration configuration carries first information including a first identifier set, then a corresponding first identifier set can be configured for each conditional reconfiguration configuration.

Alternatively, if multiple conditional reconfiguration configurations belong to the same candidate SN, then only one conditional reconfiguration configuration needs to carry the first identifier set, and the other conditional reconfiguration configurations carry the SN identifier, index indicating the candidate SN, and/or carry the configuration identifier of the conditional reconfiguration configuration. This allows conditional reconfiguration configurations belonging to the same candidate SN to configure the same first identifier set, and eliminates the need to configure the first identifier set in each conditional reconfiguration configuration, thereby saving configuration resources.

In combination with some embodiments of the first aspect, in some embodiments, sending the first information includes:

sending at least one conditional reconfiguration configuration, where the conditional reconfiguration configuration includes indication information; the conditional reconfiguration configuration is a mobility operation configuration; where the indication information is configured to indicate the SN identifier and/or first identifier set corresponding to the conditional reconfiguration configuration; the SN identifier is configured to identify a candidate SN, the candidate SN includes at least one candidate primary secondary cell and/or a candidate secondary cell group.

In the above embodiments, the terminal can be informed of the candidate SN and/or the first identifier set corresponding to the conditional reconfiguration configuration, thereby facilitating the terminal's accurate determination of whether a key update is needed.

In combination with some embodiments of the first aspect, in some embodiments, the indication information further includes at least one of:

first indication information, where the first indication information is configured to indicate the SN identifier corresponding to the conditional reconfiguration configuration; second indication information, where the second indication information is configured to indicate the first identifier set corresponding to the conditional reconfiguration configuration and/or the index corresponding to the first identifier set; third indication information, where the third indication information is configured to indicate a second configuration identifier; the second configuration identifier is configured to indicate a conditional reconfiguration configuration belonging to the same candidate SN as the conditional reconfiguration configuration.

In the above embodiments, the terminal can be informed of the candidate SN and/or the first identifier set corresponding to the conditional reconfiguration configuration in various ways, thereby adapting to more application scenarios.

In combination with some embodiments of the first aspect, in some embodiments, the first information includes:

at least one second identifier set, where the second identifier set includes one of the following:
an identifier of at least one candidate primary secondary cell;
an identifier of at least one secondary cell group;
at least one configuration identifier, where one configuration identifier indicates one conditional reconfiguration configuration.

In the above embodiments, the network device can configure the second identifier set for the terminal, for example, configuring the identifier of the primary secondary cell, the identifier of the secondary cell group, and/or the configuration identifier indicating the conditional reconfiguration configuration, thereby informing the terminal of the first identifier set corresponding to the same candidate SN and/or the conditional reconfiguration configuration.

In combination with some embodiments of the first aspect, in some embodiments, the indication information further includes fourth indication information, where the fourth indication information indicates at least one second identifier set corresponding to at least one set number.

In the above embodiments, a unified set number can be configured for each second identifier set.

In combination with some embodiments of the first aspect, in some embodiments, the fourth indication information includes an index and a set number corresponding to the index.

In the above embodiments, since the set number corresponds to the index, and the index corresponds to the candidate SN, the set number can correspond to the candidate SN, which is beneficial for the terminal to know the first identifier set corresponding to the candidate SN.

In combination with some embodiments of the first aspect, in some embodiments, the indication information further includes fifth indication information, where the fifth indication information indicates the association between the second identifier set and the first identifier set.

In the above embodiments, a pre-configured first identifier set and a pre-configured second identifier set can be associated, thereby facilitating the terminal's determination of the first identifier set corresponding to the second identifier set.

In combination with some embodiments of the first aspect, in some embodiments, the fifth indication information includes one of the following:

an index, and a first identifier set and a second identifier set corresponding to the index;
a first identifier set and a second identifier set.

In the above embodiments, the pre-configured first identifier set and the pre-configured second identifier set can be associated in various ways, thereby making it applicable to more application scenarios.

In combination with some embodiments of the first aspect, in some embodiments, the network device configures multiple conditional reconfiguration configurations for the terminal, and the multiple conditional reconfiguration configurations correspond to multiple candidate SNs, and the configuration information is used to configure a first identifier set for the candidate SNs;

and/or, the network device configures multiple conditional reconfiguration configurations for the terminal, and the multiple conditional reconfiguration configurations correspond to multiple candidate SNs, and the indication information includes first indication information;
and/or, the network device configures multiple conditional reconfiguration configurations for the terminal, and the multiple conditional reconfiguration configurations correspond to multiple candidate SNs, and the indication information includes second indication information.

In the above embodiments, in a case where the network device configures multiple conditional reconfiguration configurations for the terminal, and the multiple conditional reconfiguration configurations do not belong to the same candidate SN, a first identifier set can be configured for each candidate SN, so that the terminal knows the first identifier set corresponding to the candidate SN. And/or, the terminal can know the candidate SN and/or the first identifier set corresponding to each conditional reconfiguration configuration.

In combination with some embodiments of the first aspect, in some embodiments, the method includes sending a configuration table, where the configuration table includes a first configuration table and/or a second configuration table:

the first configuration table is configured to add at least one first identifier set, add at least one second identifier set, modify at least one first identifier set, and/or modify at least one second identifier set;
the second configuration table is configured to delete at least one first identifier set and/or delete at least one second identifier set.

In the above embodiments, the configuration table can be configured for the terminal via the network device, so that the terminal updates the first identifier set and/or the second identifier set, for example, by adding, modifying, and/or deleting the first identifier set and/or the second identifier set.

In combination with some embodiments of the first aspect, in some embodiments, the first configuration table includes an index and a first identifier set corresponding to the index; and/or the first configuration table includes an index and a second identifier set corresponding to the index; and/or the second configuration table includes an index.

In the above embodiments, a first identifier set and/or a second identifier set can be added and/or modified through a first configuration table. For example, when the first configuration table includes an index and a first identifier set corresponding to the index, and the terminal has already been configured with the first identifier set corresponding to the index, the configured first identifier set can be modified based on the first identifier set in the first configuration table. Similarly, when the first configuration table includes an index and a first identifier set corresponding to the index, and the terminal has not been configured with the first identifier set corresponding to the index, the first identifier set corresponding to the index in the first configuration table can be added. Likewise, when the first configuration table includes an index and a second identifier set corresponding to the index, and the terminal has already been configured with the second identifier set corresponding to the index, the configured second identifier set can be modified based on the second identifier set in the first configuration table. And/or, a first identifier set and/or a second identifier set can be deleted through a second configuration table. For example, when the second configuration table includes an index, the first identifier set and/or second identifier set corresponding to the index that is already configured in the terminal can be deleted.

In a second aspect, embodiments of the present disclosure provide an information processing method, including: a terminal receiving first information; and determining a key-related operation based on the first information.

In combination with some embodiments of the second aspect, in some embodiments, the key-related operation includes at least one of:

> whether to update the key;
> generating a key.

In combination with some embodiments of the second aspect, in some embodiments, determining the key-related operation based on the first information includes one of the following:

> determining the key-related operation during a mobility operation based on the first information; or
> determining the key-related operation after a mobility operation based on the first information.

In combination with some embodiments of the second aspect, in some embodiments, the key is a key corresponding to the SN.

In combination with some embodiments of the second aspect, in some embodiments, the mobility operation includes one of the following:

> CHO;
> CPAC, where the CPAC includes CPA and/or CPC;
> Subsequent CHO;
> Subsequent CPAC, where the subsequent CPAC includes subsequent CPA and/or subsequent CPC;
> LTM for a primary cell or master cell group, where the LTM includes an initial LTM and/or a subsequent LTM;
> LTM for a primary secondary cell or a secondary cell group, where the LTM includes an initial LTM and/or a subsequent LTM.

In combination with some embodiments of the second aspect, in some embodiments, receiving first information includes receiving RRC signaling, where the RRC signaling carries the first information.

In combination with some embodiments of the second aspect, in some embodiments, the first information includes configuration information, where the configuration information is used to configure a first identifier set; where the first identifier set is configured to identify a set of count values; the count values are values of counters configured to generate a key corresponding to the SN.

In combination with some embodiments of the second aspect, in some embodiments, the configuration information includes at least one of:

> an index and a first identifier set corresponding to the index;
> an index, an SN identifier, and a first identifier set corresponding to the index; the SN identifier is configured to identify a candidate SN;
> an SN identifier and a first identifier set corresponding to the SN identifier.

In combination with some embodiments of the second aspect, in some embodiments, receiving first information includes one of the following:

> receiving at least one conditional reconfiguration configuration, where each conditional reconfiguration configuration carries first information, the first information includes a first identifier set corresponding to the conditional reconfiguration configuration; where the conditional reconfiguration configuration is a mobility operation configuration;
> receiving multiple conditional reconfiguration configurations; where a first conditional reconfiguration configuration in the multiple conditional reconfiguration configurations carries the first information, the first information includes a first identifier set corresponding to the first conditional reconfiguration configuration; at least one second conditional reconfiguration configuration in the multiple conditional reconfiguration configurations carries the first information, the first information includes an SN identifier, an index, and/or a first configuration identifier; the first configuration identifier is configured to indicate the first conditional reconfiguration configuration; the second conditional reconfiguration configuration and the first conditional reconfiguration configuration are associated with the same candidate SN.

In combination with some embodiments of the second aspect, in some embodiments, receiving first information includes receiving at least one conditional reconfiguration configuration, where the conditional reconfiguration configuration includes indication information; the conditional reconfiguration configuration is a mobility operation configuration; where the indication information is configured to indicate the SN identifier and/or first identifier set corresponding to the conditional reconfiguration configuration; the SN identifier is configured to identify a candidate SN, the candidate SN includes at least one candidate primary secondary cell and/or a candidate secondary cell group.

In combination with some embodiments of the second aspect, in some embodiments, the indication information further includes at least one of:

first indication information, where the first indication information is configured to indicate the SN identifier corresponding to the conditional reconfiguration configuration;

second indication information, where the second indication information is configured to indicate the first identifier set corresponding to the conditional reconfiguration configuration and/or the index corresponding to the first identifier set;

third indication information, where the third indication information is configured to indicate a second configuration identifier; the second configuration identifier is configured to indicate a conditional reconfiguration configuration belonging to the same candidate SN as the conditional reconfiguration configuration.

In combination with some embodiments of the second aspect, in some embodiments, the first information includes:

at least one second identifier set, where the second identifier set includes one of the following:

an identifier of at least one candidate primary secondary cell;

an identifier of at least one secondary cell group;

at least one configuration identifier, where one configuration identifier indicates one conditional reconfiguration configuration.

In combination with some embodiments of the second aspect, in some embodiments, the indication information further includes fourth indication information, where the fourth indication information indicates at least one second identifier set corresponding to at least one set number.

In combination with some embodiments of the second aspect, in some embodiments, the fourth indication information includes an index and a set number corresponding to the index.

In combination with some embodiments of the second aspect, in some embodiments, the indication information further includes fifth indication information, where the fifth indication information indicates the association between the second identifier set and the first identifier set.

In combination with some embodiments of the second aspect, in some embodiments, the fifth indication information includes one of the following:

an index, and a first identifier set and a second identifier set corresponding to the index;

a first identifier set and a second identifier set.

In combination with some embodiments of the second aspect, in some embodiments, the network device configures multiple conditional reconfiguration configurations for the terminal, and the multiple conditional reconfiguration configurations correspond to multiple candidate SNs, and the configuration information is used to configure a first identifier set for the candidate SNs;

and/or, the network device configures multiple conditional reconfiguration configurations for the terminal, and the multiple conditional reconfiguration configurations correspond to multiple candidate SNs, and the indication information includes first indication information;

and/or, the network device configures multiple conditional reconfiguration configurations for the terminal, and the multiple conditional reconfiguration configurations correspond to multiple candidate SNs, and the indication information includes second indication information.

In combination with some embodiments of the second aspect, in some embodiments, the method includes receiving a configuration table, where the configuration table includes a first configuration table and/or a second configuration table:

the first configuration table is configured to add at least one first identifier set, add at least one second identifier set, modify at least one first identifier set, and/or modify at least one second identifier set;

the second configuration table is configured to delete at least one first identifier set and/or delete at least one second identifier set.

In combination with some embodiments of the second aspect, in some embodiments, the first configuration table includes an index and a first identifier set corresponding to the index; and/or, the first configuration table includes an index and a second identifier set corresponding to the index; and/or, the second configuration table includes an index.

In combination with some embodiments of the second aspect, in some embodiments, determining the key-related operation based on the first information includes one of the following:

based on the first identifier set corresponding to the current serving primary secondary cell being the same as the first identifier set corresponding to the target primary secondary cell, determining not to update the key; where the target primary secondary cell is one of a candidate primary secondary cell or a secondary cell group;

based on the index corresponding to the current serving primary secondary cell being the same as the index corresponding to the target primary secondary cell, determining not to update the key;

based on the first identifier set corresponding to the current serving primary secondary cell being different from the first identifier set corresponding to the target primary secondary cell, determining to update the key;

based on the index corresponding to the current serving primary secondary cell being different from the index corresponding to the target primary secondary cell, determining to update the key;

based on the first identifier set corresponding to the current serving primary secondary cell being different from the first identifier set corresponding to the target primary secondary cell, determining to generate a key;

based on the index corresponding to the current serving primary secondary cell being different from the index corresponding to the target primary secondary cell, determining to generate a key.

In the above embodiments, whether a key needs to be updated and/or a key needs to be generated can be accurately determined based on whether the first identifier sets corresponding to the current serving primary secondary cell and/or the target primary secondary cell are consistent.

In combination with some embodiments of the second aspect, in some embodiments, determining the key-related operation based on the first information includes one of the following:

if the SN identifier corresponding to the current serving primary secondary cell is the same as the SN identifier corresponding to the target primary secondary cell, determining that the key does not need to be updated; where the target primary secondary cell is one of a candidate primary secondary cell or a secondary cell group;

if the SN identifier corresponding to the current serving primary secondary cell is different from the SN identifier corresponding to the target primary secondary cell, determining that the key needs to be updated;

if the SN identifier corresponding to the current serving primary secondary cell is different from the SN identifier corresponding to the target primary secondary cell, determining that the key needs to be generated.

In the above embodiments, whether a key needs to be updated and/or a key needs to be generated can be accurately determined based on whether the candidate SNs corresponding to the current serving primary secondary cell and/or the target primary secondary cell are consistent, i.e., based on whether the candidate SN has changed.

In combination with some embodiments of the second aspect, in some embodiments, determining the key based on the first information includes one of the following:

the set number corresponding to the current serving primary secondary cell being the same as the set number corresponding to the target primary secondary cell, determining not to update the key; where the target primary secondary cell is one of a candidate primary secondary cell or a secondary cell group;

the set number corresponding to the current serving primary secondary cell being different from the set number corresponding to the target primary secondary cell, determining to update the key;

the set number corresponding to the current serving primary secondary cell being different from the set number corresponding to the target primary secondary cell, determining to generate a key.

In the above embodiments, the key can be accurately determined whether it is necessary to update the key and/or generate a key based on whether the set numbers corresponding to the current serving primary secondary cell and/or the target primary secondary cell are consistent. Since the set number corresponds to the index, and the index corresponds to the SN identifier of the candidate SN, the key can be accurately determined whether it is necessary to update the key and/or generate a key based on whether the candidate SN has changed.

In a third aspect, embodiments of the present disclosure provide an information processing method, including: a network device sending first information to a terminal; the terminal determining a key-related operation based on the first information.

In a fourth aspect, embodiments of the present disclosure provide a network device, including: a first transceiver module configured to send first information, where the first information is used by a terminal to determine a key-related operation.

In a fifth aspect, embodiments of the present disclosure provide a terminal, including:

a second transceiver module configured to receive the first information; and

a processing module configured to determine a key-related operation based on the first information.

In a sixth aspect, embodiments of the present disclosure provide a network device, including one or more processors; where the network device is configured to execute the optional implementation of the first aspect.

In a seventh aspect, embodiments of the present disclosure provide a terminal, including one or more processors; where the terminal is configured to execute the optional implementation of the second aspect.

In an eighth aspect, embodiments of the present disclosure provide a communication system, including a network device and a terminal; where the network device is configured to execute the method described in the optional implementation of the first aspect, and the terminal is configured to execute the method described in the optional implementation of the second aspect.

A ninth aspect provides a storage medium storing instructions that, when executed on a communication device, cause the communication device to perform the method described in the first, second, third, or optional implementations of the first, second, and third aspects.

A tenth aspect provides a program product that, when executed by a communication device, causes the communication device to perform the method described in the first, second, third, or optional implementations of the first, second, and third aspects.

An eleventh aspect provides a computer program that, when executed on a computer, causes the computer to perform an information processing method described in the first, second, third, or optional implementations of the first, second, and third aspects.

A twelfth aspect provides a chip or chip system including a processing circuit configured to perform the method described in the optional implementations of the first, second, and third aspects.

It is understood that the network device, the terminal, the communication system, the storage media, the program product, the computer program, the chip, or the chip system mentioned above are all configured to execute the methods provided in the embodiments of the present disclosure. Therefore, the beneficial effects they can achieve can be referred to in the beneficial effects of the corresponding methods, and will not be repeated here. It is understood that the communication device includes the first device and/or the network device.

The embodiments of the present disclosure provide an information processing method, a first device, a network device, a communication system, and a storage medium. In some embodiments, terms such as "information processing method", "communication method", etc. are interchangeable, as are terms such as "information processing device", "communication device", etc., and terms such as "information processing system", "communication system", etc.

The embodiments of the present disclosure are not exhaustive, but merely illustrative of some embodiments, and are not intended to limit the specific scope of protection of the present disclosure. Where there is no contradiction, each step in a particular embodiment can be implemented as an independent embodiment, and the steps can be arbitrarily combined. For example, a solution after removing some steps in a particular embodiment can also be implemented as an independent embodiment, and the order of the steps in a particular embodiment can be arbitrarily interchanged. Furthermore, the optional implementations in a particular embodiment can be arbitrarily combined; moreover, the embodiments can be arbitrarily combined. For example, some or all steps of different embodiments can be arbitrarily combined, and a particular embodiment can be arbitrarily combined with optional implementations of other embodiments.

In each embodiment of the present disclosure, unless otherwise specified or there is a logical conflict, the terminology and/or descriptions between the embodiments are consistent and can be mutually utilized. Technical features in different embodiments can be combined to form new embodiments according to their inherent logical relationships.

The terminology used in the embodiments of the present disclosure is only for the purpose of describing specific embodiments and is not intended to limit the disclosure.

In the embodiments of the present disclosure, unless otherwise stated, elements expressed in the singular form, such as "a", "an", "the", "the aforementioned", "said", "the foregoing", "this", etc., can mean "one and only one" or "one or more", "at least one", etc. For example, when using articles such as "a", "an", "the", etc. in translation, the noun following the article can be understood as either a singular or a plural expression.

In the embodiments of the present disclosure, "multiple" refers to two or more.

In some embodiments, terms such as "at least one of", "one or more", "a plurality of", "multiple", etc. can be used interchangeably.

In some embodiments, expressions such as "at least one of A and B", "A and/or B", "A in one case and B in another" and "in response to one case A and in response to another case B" may, depending on the context, include the following technical solutions: in some embodiments, A (executed regardless of B); in some embodiments, B (executed regardless of A); in some embodiments, execution is selected from A and B (A and B are selectively executed); in some embodiments, both A and B are executed. The same applies when there are more branches such as A, B, C, etc.

In some embodiments, expressions such as "A or B" may, depending on the context, include the following technical solutions: in some embodiments, A (executed regardless of B); in some embodiments, B (executed regardless of A); in some embodiments, execution is selected from A and B (A and B are selectively executed). The same applies when there are more branches such as A, B, C, etc.

The prefixes such as "first", "second", etc., in the embodiments of the present disclosure are merely for distinguishing different descriptive objects and do not constitute restrictions on the position, order, priority, number, or content of the descriptive objects. For the description of the descriptive objects, please refer to the description in the claims or the context of the embodiments. The use of prefixes should not constitute unnecessary restrictions. For example, if the descriptive object is a "field", then the ordinal numbers before "field" in "first field" and "second field" do not restrict the position or order of the "fields." "First" and "second" do not restrict whether the "fields" they modify are in the same message, nor do they restrict the order of "first field" and "second field." As another example, if the descriptive object is a "level", then the ordinal number preceding "level" in "first level" and "second level" does not restrict the priority between "levels." Similarly, the number of objects described is not limited by the ordinal number; it can be one or more. For example, in "first device", the number of "device" can be one or more. Furthermore, objects modified by different prefixes can be the same or different. For instance, if the object is described as "device", then "first device" and "second device" can be the same device or different devices, and their types can be the same or different. Similarly, if the object is described as "information", then "first information" and "second information" can be the same information or different information, and their content can be the same or different.

In some embodiments, "including A", "containing A", "indicating A", "carrying A" can be interpreted as directly carrying A or indirectly indicating A.

In some embodiments, terms such as "in response to", "in response to determining", "in the case of", "when", "upon", "if", etc. can be interchanged.

In some embodiments, terms such as "greater than", "greater than or equal to", "not smaller than", "more than", "more than or equal to", "not less than", "higher than", "higher than or equal to", "not lower than", "above", etc. can be interchanged, while "smaller than", "smaller than or equal to", "not greater than", "less than", "less than or equal to", "not more than", "lower than", "lower than or equal to", "not higher than or equal to", "below", etc. can be interchanged.

In some embodiments, "device" can be interpreted as physical or virtual, and its name is not limited to the names described in the embodiments. Terms such as "device", "equipment", "device", "circuit", "network element", "node", "function", "unit", "section", "system", "network", "chip", "chip system", "entity", "body", etc. can be used interchangeably.

In some embodiments, "network" can be interpreted as a device included in the network (e.g., an access network device, a core network device, etc.).

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "bandwidth part (BWP)", etc. are interchangeable.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc. are interchangeable.

In some embodiments, the access network device, the core network device, or the network device can be replaced with terminals. For example, embodiments of the present disclosure can also be applied to structures that replace communication between the access network device, the core network device, or the network device and the terminal with communication between multiple terminals (e.g., also referred to as device-to-device (D2D), vehicle-to-everything (V2X), etc.). In this case, the structure can also be configured such that the terminal has all or part of the functions of the access network device. Furthermore, terms such as "uplink", "downlink", etc. can be replaced with terms corresponding to inter-terminal communication (e.g., "sidelink"). For example, uplink channel, downlink channel, etc., can be replaced with sidelink channel, uplink, downlink, etc., can be replaced with sidelink.

In some embodiments, the terminal may be replaced by the access network device, the core network device, or the network device. In this case, the access network device, the core network device, or the network device may also be configured to have all or part of the functions of the terminal.

In some embodiments, the acquisition of data, information, etc., may comply with the laws and regulations of the country where the user is located.

In some embodiments, data, information, etc., may be acquired after obtaining the user's consent.

Furthermore, each element, each row, or each column in the tables of the embodiments of the present disclosure can be implemented as an independent embodiment, and any combination of any element, any row, or any column can also be implemented as an independent embodiment.

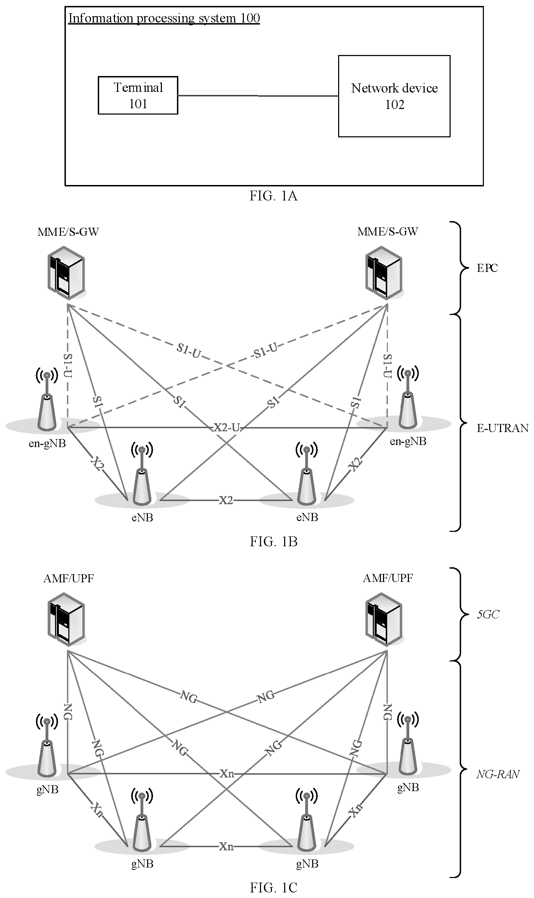

FIG. 1A is a schematic structural diagram of an information processing system 100 according to an embodiment of the present disclosure. As shown in FIG. 1A, the information processing system 100 may include a terminal 101 and a network device 102.

In some embodiments, the network device 102 may include at least one of an access network device and a core network device.

In some embodiments, for example, the terminal 101 includes, but is not limited to, at least one of a mobile phone, a wearable device, an Internet of Things (IoT) device or terminal, a car with communication function, a smart car, a tablet computer (pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home.

In some embodiments, for example, the access network device is a node or device that connects the terminal to a wireless network. The access network device may include, but is not limited to, at least one of an evolved Node B (eNB) in a 5G communication system, a next generation evolved Node B (ng-eNB), a next generation NodeB (gNB), a node B (NB), a home node B (HNB), a home evolved node B (HeNB), a radio backhaul device, a radio network controller (RNC), a base station controller (BSC), a base transceiver station (BTS), a base band unit (BBU), a mobile switching center, a base station in 6G communication system, an open RAN, a cloud RAN, a base station in other communication systems, and an access node in wireless fidelity (WiFi) system.

In some embodiments, the technical solutions of the present disclosure are applicable to Open RAN architectures. In this case, the interfaces between or within access network devices involved in the embodiments of the present disclosure can become internal interfaces of Open RAN. The processes and information interactions between these internal interfaces can be implemented through software or programs.

In some embodiments, the access network device can include a central unit (CU) and a distributed unit (CU), where the CU is also referred to as a control unit. The CU-DU structure allows for the separation of the protocol layers of the access network device. A part of the protocol layer functions is centrally controlled by the CU, while the remaining part of or all protocol layer functions are distributed across the DUs, and the CU centrally controls the DUs, but is not limited to this.

In some embodiments, the core network device can be a single device, including a first network element, a second network element, etc., or it can be multiple devices or a device group, respectively including all or part of the aforementioned first and second network elements. Network elements can be virtual or physical. The core network includes, for example, at least one of the Evolved Packet Core (EPC), 5G Core Network (5GCN), and Next Generation Core (NGC).

It is understood that the information processing system described in the embodiments of the present disclosure is for the purpose of more clearly illustrating the technical solutions of the embodiments of the present disclosure, and does not constitute a limitation on the technical solutions provided by the embodiments of the present disclosure. Those skilled in the art will recognize that with the evolution of system architecture and the emergence of new service scenarios, the technical solutions provided by the embodiments of the present disclosure are also applicable to similar technical problems.

The following embodiments of the present disclosure can be applied to the information processing system 100 shown in FIG. 1A, or part of its main components, but are not limited thereto. The entities shown in FIG. 1A are illustrative. The information processing system may include all or some of the entities in FIG. 1A, or it may include other entities beyond those shown in FIG. 1A. The number and form of each entity are arbitrary. The connection relationship between the entities is illustrative. The entities may not be connected to each other or may be connected in any way. The connection may be direct or indirect, wired or wireless.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems extended from them, etc. Furthermore, multiple systems can be combined (e.g., a combination of LTE or LTE-A with 5G, etc.).

In some embodiments, dual connectivity technologies include the following:

First, Multi-Radio Dual Connectivity (MR-DC).

MR-DC is a generalized Universal Mobile Telecommunication System (UMTS) Terrestrial Radio Access (Intra-E-UTRA) dual connectivity. The UE can utilize radio resources provided by two different resource scheduling units located on two different New Generation Radio Access Network (NG-RAN) nodes. Through a non-ideal backhaul connection, one provides New Radio (NR) access, and the other provides E-UTRA or NR access. The base station of the primary cell can be the master node (MN), and the base station of the secondary cell can be the secondary node (SN). The master and secondary nodes are connected via a network interface, with at least one master node connected to the core network.

Second, MR-DC based on the Evolved Packet Core (EPC).

FIG. 1B illustrates an architecture diagram of an Evolved Universal Terrestrial Radio Access Network (E-UTRA-NR) dual connectivity (EN-DC). E-UTRAN supports MR-DC through E-UTRA-NR DC (EN-DC), where the UE connects to a base station eNB acting as the master node (MN) and a base station en-gNB acting as the secondary node (SN). The base station eNB connects to the core network EPC via the S1 interface and to the base station en-gNB via the X2 interface. The base station en-gNB can also connect to the core network EPC via the S1-U interface and to other base station en-gNBs via the X2-U interface. The core network device of the EPC may include a Mobility Management Entity (MME) and/or a Service-Gateway (S-GW).

Third, MR-DC of the 5th Generation Core Network (5GC).

5GC supports the following dual connectivity methods:

1) Dual connectivity of E-UTRA-NR and NGEN-DC.

The 5G Radio Access Network (NG-RAN) supports NG-RAN E-UTRA-NR dual connectivity (NGEN-DC), where the UE connects to the ng-eNB as the master node (MN) and to a gNB as the secondary node (SN). The base station (ng-eNB) connects to the 5GC, and the base station (gNB) connects to the base station ng-eNB via the Xn interface.

2) Dual Connectivity of NR-E-UTRA.

NG-RAN supports NR-E-UTRA dual connectivity (NE-DC), where the UE connects to a base station gNB acting as the master node MN and a base station ng-eNB acting as the secondary node SN. The base station gNB connects to the 5GC, and the base station ng-eNB connects to the base station gNB via the Xn interface.

3) Dual Connectivity of NR-NR.

FIG. 1C illustrates an NR-DC architecture. NG-RAN supports NR-NR dual connectivity (NR-DC), where the UE connects to a base station (gNB) acting as the master node MN and another base station gNB acting as the secondary node (SN). The master base station gNB connects to the 5GC via the NG interface, and the two base stations gNBs are connected via the Xn interface. The secondary base station gNB can also connect to the 5GC via the NG-U interface. Furthermore, NR-DC can also be used for UE access to a single base station gNB, and the base station gNB simultaneously acts as both the master node MN and the secondary node SN, and is configured with both the master cell group (MCG) and the secondary cell group (SCG).

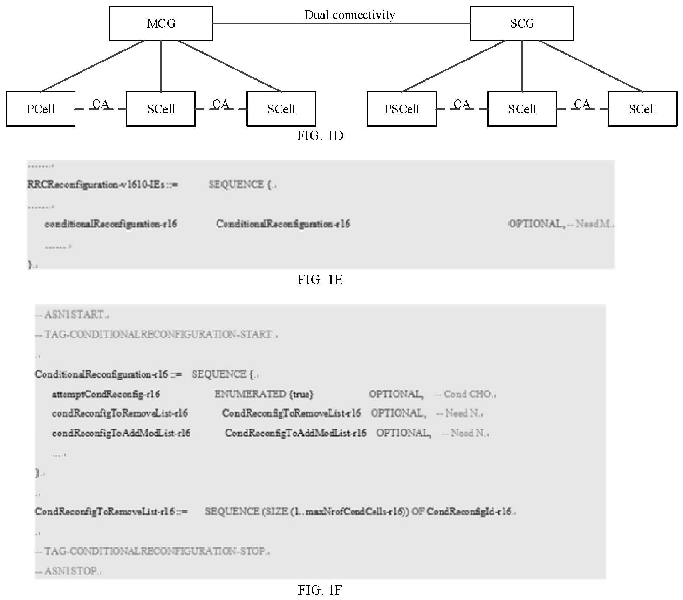

In some embodiments, as shown in FIG. 1D, under dual connectivity, the UE can access two cell groups: the master cell group (MCG) and the secondary cell group (SCG). Within the MCG, there may be multiple cells, one of which is configured to initiate initial access; this cell is called the PCell. As the name suggests, the PCell is the most "primary" cell in the MCG. The PCell in the MCG and the SCell in the MCG are linked together via CA. In the MCG, the primary cell is the PCell, and the secondary cell is the SCell; in the SCG, the primary secondary cell is the PSCell, and the secondary cell is the SCell. Because many signalings are only transmitted on the PCell and PSCell, for ease of description, the protocol also defines a concept: a special primary cell (sPCell) and the PSCell, collectively referred to as sPCell.

Subsequent CHO/CPAC can be referred to as selective activation of the cell group (MCG/SCG). In some embodiments, a subsequent CPAC includes at least one of a subsequent CPC and a subsequent CPA.

In some embodiments, during Conditional Handover (CHO) and Conditional PSCell Change (CPC)/Conditional PSCell Addition (CPA), the terminal configured with CHO/CPC/CPA must release the CHO/CPC/CPA configuration upon completing random access to the target PCell/PSCell. Therefore, if the network does not reconfigure and reinitialize CHO/CPC/CPA, the terminal will have no opportunity to continue executing CHO/CPC/CPA later. This increases the delay for handover or SCG change and signal overhead, especially in FR2 scenarios with frequent CG changes.

Therefore, subsequent CHO/CPA was proposed. Subsequent CHO/CPA can also be called Cell/Cell Group Selective Activation. After triggering a cell group or cell change or addition, the terminal does not delete the conditional reconfiguration configuration (CHO and/or CPAC configuration). Without RRC reconfiguration or reinitialization of the conditional reconfiguration configuration, the original CHO/CPAC configuration can continue to be used for subsequent CHO/CPAC. Supporting subsequent CHO/CPAC can effectively reduce signaling overhead and shorten the downtime of cell group (or SPCell) changes.

A subsequent CHO/CPAC configuration includes, but is not limited to, at least one of: a configuration identifier, an execution condition, and a configuration of a corresponding candidate target cell (or cell group).

The network side can simultaneously configure multiple subsequent CHO/CPAC configurations and reference configurations for the UE.

In some embodiments, the configuration identifier is an identifier (ID) indicating the relevant configuration.

In some embodiments, the execution condition is a condition that triggers a mobility operation (a condition that the UE needs to meet to trigger CHO or CPAC).

In some embodiments, the corresponding candidate target cell (or cell group) configuration is the candidate configuration corresponding to the target cell accessed by the UE when triggering the mobility operation. This configuration can be represented by RRC Reconfiguration.

The reference configuration is the reference configuration corresponding to the candidate target configuration. The candidate target configuration is an incremental configuration of the reference configuration. A complete configuration can be generated based on the candidate target configuration and the reference configuration. This configuration can be represented by RRC Reconfiguration. The UE will apply the complete configuration when executing CHO/CPAC. The reference configuration can be a network-generated specific configuration or the UE's current configuration. A reference configuration is only required for subsequent CHO/CPAC configuration.

In some embodiments, the CHO and CPAC configurations do not include a reference configuration, but only the configuration identifier, the execution condition, and the configuration of the corresponding candidate target cell (or cell group). When the UE triggers mobility operations, the target cell it accesses directly applies the configuration of the candidate target cell (or cell group).

In subsequent CHO/CPAC, the network side can provide candidate configurations to the UE. These candidate configurations can be applied multiple times subsequently without being re-provided. That is, after applying a new cell group configuration to access a new cell in the subsequent CHO/CPAC, the UE will not delete the original subsequent CHO/CPAC configuration.

For example, for the subsequent CPAC, i.e., selective activation of the SCG, the subsequent CPAC can continue even after SCG and/or PSCell change or addition without RRC reconfiguration.

In some embodiments, as shown in FIG. 1E, an RRCReconfiguration message is a command to modify the RRC connection. It can transmit information for measurement configuration, mobility control, radio resource configuration (including RBs, MAC master configuration, and physical channel configuration), and as a security configuration.

In some embodiments, the conditional reconfiguration is used for configuring candidate target SpCells and/or execution condition for at least one of conditional handover, conditional PSCell addition, or conditional PSCell change.

In some embodiments, the conditional reconfiguration for a conditional reconfiguration information element is used to add, change and issue the configuration of conditional reconfiguration.

In some embodiments, as shown in FIG. 1F, one implementation of the conditional reconfiguration information element is provided.

In some embodiments, the mobility configuration of conditional reconfiguration may include, but is not limited to, one or more of:

a conditional reconfiguration add/modify list (condReconfigToAddModList) for adding one or more conditional reconfigurations and/or modifying one or more existing conditional reconfigurations; and

a conditional reconfiguration delete list (condReconfigToRemoveList) for deleting the mobility configuration for one or more conditional reconfigurations.

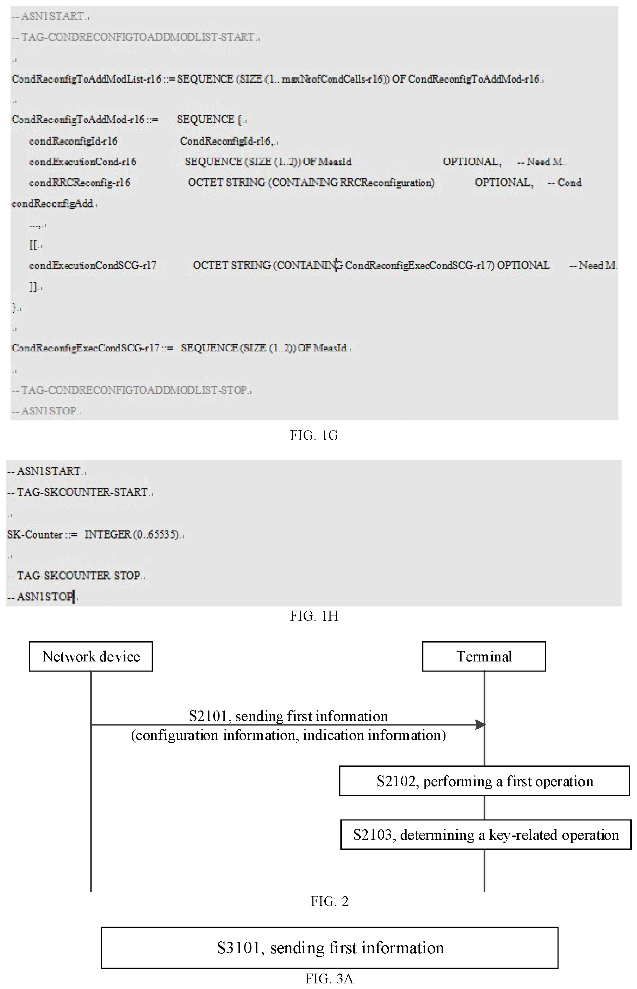

In some embodiments, as shown in FIG. 1G, an implementation of a conditional reconfiguration addition and/or modification information element (CondReconfigToAddModList) is provided. In some embodiments, the information element concerns a list of conditional reconfigurations to add or modify, with for each entry the conditional reconfiguration ID *condReconfigId* and the associated conditional execution condition/ conditional execution condition SCG (*condExecutionCond/condExecutionCondSCG)* and conditional reconfiguration *condRRCReconfig.*

In some embodiments, The IE *SK-Counter* is a counter used upon initial configuration of SN security for NR-DC and NE-DC, as well as upon refresh of S-K$_{gNB}$ or S-K$_{cNB}$ based on the current or newly derived K$_{gNB}$ during RRC Resume or RRC Reconfiguration. In some embodiments, the IE SK-Counter can be implemented as shown in FIG. 1H.

In some embodiments, the SN counter maintenance can be at least one of:

The MN shall maintain a 16-bit counter, such as an SN Counter, in its AS security context. The SN Counter is used when computing the K$_{SN}$.

The MN maintains the value of the counter SN Counter for a duration of the current 5G AS security context between UE and MN. The UE does not need to maintain the SN Counter after it has computed the K$_{SN}$ since the MN provides the UE with the current SN Counter value when the UE needs to compute a new K$_{SN}$. The SN Counter is a fresh input to K$_{SN}$ derivation. That is, the UE assumes that the MN provides a fresh SN Counter each time and does not need to verify the freshness of the SN Counter. (NOTE: An attacker cannot, over the air modify the SN Counter and force re-use of the same SN Counter. The reason for this is that the SN Counter is delivered over the RRC connection between the MN and the UE, and this connection is both integrity protected and protected from replay.)

The MN shall set the SN Counter to "0" when a new AS root key, K$_{NG-RAN}$, in the associated 5G AS security context is established. The MN shall set the SN Counter to "1" after the first calculated K$_{SN}$, and monotonically increment it for each additional calculated K$_{SN}$. The SN Counter value "0" is used to calculate the first K$_{SN}$.

If the MN decides to release the offloaded connections to the SN and later decides to re-start the offloading to the same SN, the SN Counter value shall keep increasing, thus keeping the computed K$_{SN}$ fresh.

The MN shall refresh the root key of the 5G AS security context associated with the SN Counter before the SN Counter wraps around. Refreshing the root key is done using intra cell handover. When the root key is refreshed, the SN Counter is reset to "0".

In some embodiments, the derivation of keys may include at least one of:

The UE and MN shall derive the security key K$_{SN}$ of the SN.

The SN can be a ng-eNB or a gNB. The SN RRC and UP keys shall be derived from the K$_{SN}$ both at the SN and the UE.

Once all the SN RRC and UP keys have been derived from the K$_{SN}$, the SN and UE may delete the K$_{SN}$.

In some embodiments, the derivation of K$_{SN}$ for dual-connectivity may be as follows:

This input string is used when the MN and UE derive K$_{SN}$ during dual connectivity. The following input parameters shall be used:

$$FC = 0x79;$$

P0 = Value of the SN Counter as a non-negative integer;
L0 = length of the SN Counter value (e.g., 0x00 0x02).

When the MN is an ng-eNB, the input key should be KeNB; when the MN is a gNB, the input key should be KgNB.

In some embodiments, the security issues of subsequent CPCs are as follows:

The security key for updating the SN is K$_{SN}$ for generating the SN by the MN, which is sent to the SN via Xn-C. To generate the K$_{SN}$, the MN is associated with a counter called SK-Counter. The K$_{SN}$ is generated based on the security keys of the MN and SK-Counter. The MN sends the value of SK-Counter to the terminal via RRCRconfiguration. In some embodiments, the security of the SN depends only on the keys of the SK-Counter and the MN.

For subsequent CPC, if the existing process is followed, the SK-Counter stored in the CPC configuration will continue to be used. Therefore, for multiple subsequent CPCs on the same candidate PSCell, if the same SK-Counter stored in the CPC configuration is used, the same security key will be generated. This will lead to a security key reuse problem (i.e., using the same security key and Packet Data Convergence Protocol (PDCP) counter value to encrypt different packets, which is not allowed).

In some embodiments, regarding the aforementioned security issues, the following security scenarios are clarified:

Question: RAN2 would like to know whether SA3 considers the existing handling of SK-Counter/ S-K$_{gNB}$ in the above scenarios acceptable, i.e., the same SK-Counter/ S-K$_{gNB}$ is used while connected to SN #1 before and after being connected to SN #2.

Answer: No, it is not acceptable from a security point of view.

Question: If SA3 considers the existing handling of SK-Counter/ S-K$_{gNB}$ in the above scenarios not acceptable, RAN2 kindly asks SA3 to provide requirements for a solution.

Answer: Same S-K$_{gNB}$ shall not be used. SA3 will specify an additional sub-clause in for the security of selective SCG activation.

In some embodiments, it is clarified that the UE sends the SN change; the same SK-Counter/S-K$_{gNB}$ cannot be used before and after the SN change. A solution to the security issue is also proposed. As detailed below, the following is the solution details from a security perspective:

Step 1: The MN provides to the UE the SN Counter values for each SN, and the UE stores these values along with the CPC.

Step 2: The UE derives the $K_{SN}$ using the $K_{gNB}$ together with an unused SN Counter value preprovisioned by the MN. The UE changes the SN Counter upon every SN change.

In some embodiments, the following problem exists:

The UE generates a new $K_{SN}$ after an SN change occurs based on the SN counter pre-configured by the MN to avoid SN key reuse. However, since the CPC configuration corresponds to each candidate cell configuration, the CPC configuration information does not carry candidate SN information. The UE cannot know the candidate SN corresponding to each candidate PSCell/SCG, so the UE is unaware of whether an SN change has occurred when executing the Subsequent CPC.

Since the CPC and subsequent CPCs are triggered by the UE based on the condition pre-configured by the network side, the network side cannot know when the UE will trigger the subsequent CPC, and therefore cannot directly instruct the UE whether to update the $K_{SN}$ when the next CPC occurs.

Therefore, to address the aforementioned problem, embodiments of the present disclosure provide a method for indicating whether a $K_{SN}$ needs to be updated during subsequent CPC. Through pre-configured network indication information, the UE can determine whether an SN change will occur during subsequent CPC. If an SN change occurs, the UE obtains a new SK counter value and generates a new KSN based on this SK counter value and the KgNB. The network indication information indicates the SN or the corresponding SN counter value associated with each candidate cell/cell group configuration. The pre-configured indication information refers to the indication information configured during the CPAC preparation phase of the UE.

In some embodiments, the UE can be the terminal as described in previous embodiments.

FIG. 2 is an interactive schematic diagram of an information processing method according to an embodiment of the present disclosure. As shown in FIG. 2, the embodiment of the present disclosure relates to an information processing method used in an information processing system 100. The method includes:

Step S2101: The network device sends first information to the terminal.

In some embodiments, the terminal receives the first information sent by the network device.

In some embodiments, the network device sends RRC signaling to the terminal, where the RRC signaling carries the first information.

In some embodiments, the terminal receives RRC signaling sent by the network device, where the RRC signaling carries the first information.

In some embodiments, the RRC signaling can be any RRC signaling sent by the network device to the terminal; for example, the RRC signaling can be an RRC reconfiguration message.

In some embodiments, the first information can be carried by a conditional reconfiguration configuration. For example, the first information can be included in an IE Conditional Reconfiguration message and sent.

In some embodiments, the network device sends a Media Access Control (MAC) control element (CE) to the terminal; where the MAC CE carries the first information.

In some embodiments, the terminal receives a MAC CE sent by the network device; where the MAC CE carries the first information.

In some embodiments, the network device sends Downlink Control Information (DCI) to the terminal; where the DCI carries the first information.

In some embodiments, the terminal receives DCI sent by the network device; where the DCI carries the first information.

In some embodiments, the network device sends a Non-Access Stratum (NAS) message; where the NAS message carries the first information.

In some embodiments, the terminal receives a NAS message sent by the network device; where the NAS message carries the first information.

In some embodiments, the first information is used by the terminal to determine a key-related operation. In some embodiments, the key-related operation includes whether to update the key and/or generate a key.

In some embodiments, the first information is used by the terminal to determine whether to update the key.

In some embodiments, the first information is used by the terminal to determine whether to generate a key.

In some embodiments, the first information is used by the terminal for a key-related operation during or after a mobility operation.

In some embodiments, the first information is used by the terminal to determine whether to update the key during a mobility operation.

In some embodiments, the first information is used by the terminal to determine whether to update the key before, during, or after a mobility operation.

In some embodiments, the first information is used by the terminal to generate a key during a mobility operation.

In some embodiments, the first information is used by the terminal to generate a key before, during, or after a mobility operation.

In some embodiments, the name of the key is not limited, and it may be, for example, a security key, security material, key information, or password information, etc.

In some embodiments, the key can be a key corresponding to the secondary node (SN). For example, the key corresponding to the SN can be a secondary key. The secondary key can be at least one of: a secondary key (S-KeNB), a secondary key (S-KgNB), a secondary node key (KSN), etc.

In some embodiments, the key can be a key corresponding to the master node (MN). For example, the key corresponding to the MN can be a primary key (KgNB), etc.

In some embodiments, the mobility operation can include at least one of: CHO, CPAC, subsequent CHO, subsequent CPAC, Layer 1/Layer 2-Triggered Mobility (LTM) for the primary cell (PCell) or master cell group (MCG), and LTM for the primary secondary cell (PSCell) or secondary cell group (SCG). For example, CPAC includes CPA and/or CPC. For example, subsequent CPAC includes subsequent CPA and/or subsequent CPC. For example, the LTM for a primary cell or master cell group includes initial LTM and/or subsequent LTM. Alternatively, the LTM for a primary secondary cell or secondary cell group includes initial LTM and/or subsequent LTM.

In some embodiments, the name of the first information is not limited, and it may be, for example, configuration information and/or indication information, etc.

In some embodiments, the first information includes configuration information.

In some embodiments, the configuration information is used to configure a first identifier set. For example, the configuration information is used by the network device to configure the first identifier set for the terminal.

In some embodiments, the configuration information is used to configure a first identifier set for at least one candidate SN.

In some embodiments, the name of the configuration information is not limited; it may be, for example, a first parameter or a value of counter, etc. It is sufficient that the first parameter or the value of the counter can be used to generate a key with one of a root key (e.g., KgNB), a long-term certificate, a symmetric key, or a public/private key pair.

In some embodiments, the first identifier set is configured to identify a set of count values; the count values are the values of the counters. In some embodiments, the value of the counter or the count value is configured to generate the key corresponding to the SN.

In some embodiments, the first identifier set may include at least one count value.

In some embodiments, the count value can be any number. For example, the count value can be any integer from 0 to 65535, etc.

In some embodiments, the count value can be SK Counter values or SN Counter values, etc.

In some embodiments, one first identifier set corresponds to one index.

In some embodiments, the configuration information may include an index and a first identifier set corresponding to the index. For example, the configuration information can be implemented as shown in Table 1 below. For example, the index may be one or more. For example, the index corresponds one-to-one with the first identifier set.

Table 1

| Index=1 | {SN Counter value 11, SN Counter value 12, ...} |
|---------|--------------------------------------------------|
| Index=2 | {SN Counter value 21, SN Counter value 22, SN Counter value 32, ...} |
| ...... | ...... |
| Index=n | {SN Counter value n1, SN Counter value n2, ...} |

In some embodiments, the configuration information may include an index, and a first identifier set and an SN identifier corresponding to the index; the SN identifier is configured to identify the candidate SN. For example, the configuration information can be implemented as shown in Table 2 below. For example, the index may be one or more. For example, the index corresponds one-to-one with the first identifier set, and the index corresponds one-to-one with the SN identifier.

Table 2

| Index=1 | SN1 | {SN Counter value 11, SN Counter value 12, ...} |
|---------|-----|--------------------------------------------------|
| Index=2 | SN2 | {SN Counter value 21, SN Counter value 22, SN Counter value 32, ...} |

(continued)

| ...... | ...... | ...... |
|---|---|---|
| Index=n | SNn | {SN Counter value n1, SN Counter value n2, ...} |

In some embodiments, the configuration information may include an SN identifier and a first identifier set corresponding to the SN identifier; the SN identifier is configured to identify the candidate SN. For example, the configuration information can be implemented as shown in Table 3 below. For example, the SN identifier can be one or more. For example, the SN identifier corresponds one-to-one with the first identifier set.

Table 3

| SN1 | {SN Counter value 11, SN Counter value 12, ...} |
|---|---|
| SN2 | {SN Counter value 21, SN Counter value 22, SN Counter value 32, ...} |
| | ...... |
| SNn | {SN Counter value n1, SN Counter value n2, ...} |

In some embodiments, each index corresponds to one candidate SN.

In some embodiments, the SN identifier can be any number or string, etc., and for example, SN1, SN2, and SN3 are identifiers for different candidate SNs.

In some embodiments, the first information is included in the conditional reconfiguration configuration. The conditional reconfiguration configuration is either a configuration for conditional reconfiguration or a configuration for mobility operation. In some embodiments, the mobility operation can be any mobility operation as described in previous embodiments.

In some embodiments, the network device sends at least one conditional reconfiguration configuration to the terminal, where the conditional reconfiguration configuration carries the first information. The at least one conditional reconfiguration configuration includes one or more conditional reconfiguration configurations.

In some embodiments, the terminal receives at least one conditional reconfiguration configuration sent by the network device, where the conditional reconfiguration configuration carries the first information.

In some embodiments, the at least one conditional reconfiguration configuration can be carried in a single message or signaling.

In some embodiments, the at least one conditional reconfiguration configuration can be carried in different messages or signaling.

In some embodiments, the message or signaling can be at least one of the RRC signaling, DCI, MAC, and NAS messages as described in previous embodiments.

In some embodiments, each conditional reconfiguration configuration carries first information, and the first information includes a first identifier set corresponding to the conditional reconfiguration configuration.

In some embodiments, one of the at least one conditional reconfiguration configurations carry a first identifier set corresponding to the conditional reconfiguration configuration.

In some embodiments, a first conditional reconfiguration configuration in the multiple conditional reconfiguration configurations carries first information, and the first information includes first information of the first identifier set corresponding to the first conditional reconfiguration configuration; at least one second conditional reconfiguration configuration in the multiple conditional reconfiguration configurations carries first information, and the first information includes an SN identifier, an index, and/or a first configuration identifier; the first configuration identifier is configured to identify the first conditional reconfiguration configuration; the second conditional reconfiguration configuration is associated with the same candidate SN as the first conditional reconfiguration configuration.

In some embodiments, the first configuration identifier can be any encoded string, etc.

In some embodiments, the first information includes indication information.

In some embodiments, the network device sends at least one conditional reconfiguration configuration to the terminal, where the conditional reconfiguration configuration includes indication information.

In some embodiments, the terminal receives at least one conditional reconfiguration configuration sent by the network device, where the conditional reconfiguration configuration includes indication information.

In some embodiments, the network device sends RRC signaling, DCI, MAC CE, or NAS message to the terminal, where the RRC signaling, DCI, MAC CE, or NAS message may include indication information.

In some embodiments, the indication information is configured to indicate an SN identifier and/or a first identifier set corresponding to the conditional reconfiguration configuration. In some embodiments, the SN identifier is configured to identify a candidate SN. In some embodiments, the candidate SN includes at least one candidate primary secondary cell and/or a candidate secondary cell group. In some embodiments, the candidate SN includes at least one cell and/or a cell group. In some embodiments, the conditional reconfiguration configuration is a configuration for mobility operation; the mobility operation can be the mobility operation as described in previous embodiments.

In some embodiments, the SN identifier can be a node identifier of the candidate SN, a number or string of the candidate SN identifier, etc.

In some embodiments, the name of the indication information is not limited, and it may be, for example, a second parameter or associated information, etc.

In some embodiments, the indication information further includes at least one of:

first indication information, where the first indication information is configured to indicate an SN identifier corresponding to the conditional reconfiguration configuration;
second indication information, where the second indication information is configured to indicate a first identifier set corresponding to the conditional reconfiguration configuration and/or an index corresponding to the first identifier set;
third indication information, where the third indication information is configured to indicate a second configuration identifier; the second configuration identifier is configured to indicate a conditional reconfiguration configuration belonging to the same candidate SN as the conditional reconfiguration configuration.

In some embodiments, the first indication information, the second indication information, and the third indication information can all be one or more bits.

In some embodiments, the indication information is used to configure the second identifier set. In some embodiments, the second identifier set is configured to indicate a second identifier set corresponding to the same candidate SN.

In some embodiments, the first information includes at least one second identifier set.

In some embodiments, the second identifier set includes one of the following: the identifier of at least one candidate primary secondary cell; the identifier of at least one secondary cell group; and at least one configuration identifier. In some embodiments, one configuration identifier is configured to indicate one conditional reconfiguration configuration.

In some embodiments, the second identifier set can be any number or string, etc.

In some embodiments, the indication information may include fourth indication information, where the fourth indication information is configured to indicate at least one second identifier set corresponding to at least one set number.

In some embodiments, the fourth indication information includes an index and a set number corresponding to the index. The index corresponds one-to-one with the set number.

In some embodiments, the fourth indication information may include one or more bits.

In some embodiments, the set number can be any number or string.

For example, the fourth indication information can be implemented as shown in Table 4 below. For example, the set number corresponds one-to-one with the second identifier set.

Table 4

| Set 1 | Cell 11, Cell 12,....Cell1x |
|-------|------------------------------|
| Set 2 | Cell 21, Cell 22,....Cell2x |
| ... | ... |
| Set n | Cell n1, Cell n2,....Cell nx |

For example, Cellnx in Table 4 can be a cell identifier. For example, the cell identifier can be an identifier of a candidate primary secondary cell.

For example, Cellnx in Table 4 can be a cell group identifier. For example, the cell group identifier can be an identifier of a candidate secondary node.

For example, Cellnx in Table 4 can be a configuration identifier.

For example, the set number corresponds one-to-one with a set of cell identifiers.

For example, the set number corresponds one-to-one with a set of cell group identifiers.

For example, the set number corresponds one-to-one with a set of configuration identifiers.

In some embodiments, the indication information is configured to associate the second identifier with the first identifier set.

In some embodiments, the indication information may include fifth indication information, where the fifth indication information is configured to indicate the association between the second identifier set and the first identifier set.

In some embodiments, the fifth indication information may be one or more bits.

In some embodiments, the name of the fifth indication information is not limited; it may be, for example, association information, etc.

In some embodiments, the fifth indication information may include an index, and a first identifier set and a second identifier set corresponding to the index. For example, the fifth indication information can be implemented as shown in Table 5 below. For example, the index corresponds one-to-one with the first identifier set, and the index also corresponds one-to-one with the second identifier set.

Table 5

| Index=1 | {SN Counter value 11, SN Counter value 12, ...} | Cell 11, Cell 12,....Celllx |
|---|---|---|
| Index=2 | {SN Counter value 21, SN Counter value 22, SN Counter value 32, ...} | Cell 21, Cell 22,....Cell2x |
| ...... | ...... | ... |
| Index=n | {SN Counter value n1, SN Counter value n2, ...} | Cell n1, Cell n2,....Cell nx |

In some embodiments, the fifth indication information may include a first identifier set and a second identifier set. For example, the fifth indication information can be implemented as shown in Table 6 below.

Table 6

| {SN Counter value 11, SN Counter value 12, ...} | Cell 11, Cell 12,....Cell1x |
|---|---|
| {SN Counter value 21, SN Counter value 22, SN Counter value 32, ...} | Cell 21, Cell 22,....Cell2x |
| ...... | ... |
| {SN Counter value n1, SN Counter value n2, ...} | Cell n1, Cell n2,....Cell nx |

It is understood that each element in Tables 1 to 6 above exists independently. These elements are listed in the same table as an example, but this does not mean that all elements in the table must exist simultaneously as shown in the table. The value of each element is independent of the values of any other elements in Tables 1 to 6. Therefore, those skilled in the art will understand that the value of each element in Tables 1 to 6 is an independent embodiment.

In some embodiments, the configuration information and indication information in the previous embodiments can be sent separately, or they can be sent together.

In some embodiments, the network device in the previous embodiments can send the configuration information first, followed by the indication information.

In some embodiments, the network device configures multiple conditional reconfiguration configurations for the terminal, and the multiple conditional reconfiguration configurations correspond to multiple candidate SNs. The configuration information is used to configure a first identifier set of the candidate SNs.

In some embodiments, the network device configures multiple conditional reconfiguration configurations for the terminal, and the multiple conditional reconfiguration configurations correspond to multiple candidate SNs. The indication information includes first indication information and/or second indication information.

In some embodiments, the first information includes a configuration table, or the configuration information includes a configuration table.

In some embodiments, the terminal receives the configuration table sent by the network device.

In some embodiments, the network device sends RRC signaling to the terminal, where the RRC signaling carries a configuration table.

In some embodiments, the terminal receives RRC signaling sent by the network device, where the RRC signaling carries a configuration table.

In some embodiments, the RRC signaling can be any RRC signaling sent by the network device to the terminal; for example, the RRC signaling can be an RRC reconfiguration message.

In some embodiments, the configuration table can be sent via conditional reconfiguration configuration. For example, the configuration table can be included in an IE Conditional Reconfiguration and sent.

In some embodiments, the network device sends a MAC CE to the terminal; where the MAC CE carries a configuration table.

In some embodiments, the terminal receives a MAC CE sent by the network device; where the MAC CE carries a configuration table.

In some embodiments, the network device sends DCI to the terminal; where the DCI carries a configuration table.

In some embodiments, the terminal receives DCI sent by the network device; where the DCI carries a configuration table.

In some embodiments, the network device sends a NAS message to the terminal; where the NAS message carries a configuration table.

In some embodiments, the terminal receives a NAS message sent by the network device; where the NAS message carries a configuration table.

In some embodiments, the name of the configuration table is not limited, and may be, for example, configuration information or a configuration set, etc.

In some embodiments, the configuration table includes a first configuration table and/or a second configuration table.

In some embodiments, the network device sends a conditional reconfiguration configuration to the terminal, where the conditional reconfiguration configuration includes a first configuration table and/or a second configuration table.

In some embodiments, the terminal receives a conditional reconfiguration configuration sent by the network device, where the conditional reconfiguration configuration includes a first configuration table and/or a second configuration table.

In some embodiments, the name of the first configuration table is not limited, and may be, for example, adding or modifying information, etc.

In some embodiments, the first configuration table is used for one of the following: adding at least one first identifier set, adding at least one second identifier set, modifying at least one first identifier set, and modifying at least one second identifier set.

In some embodiments, the first configuration table includes at least one of: an index and a first identifier set corresponding to the index, and an index and a second identifier set corresponding to the index.

In some embodiments, the name of the second configuration table is not limited, and may be, for example, deleting information, etc.

In some embodiments, the second configuration table is used to delete at least one first identifier set and/or delete at least one second identifier set.

In some embodiments, the second configuration table includes an index.

In some embodiments, the configuration table may be sent independently of the first information. For example, the network device sends the first information and the configuration table through different messages or signaling.

Step S2102: The terminal performs a first operation.

In some embodiments, the terminal performs the first operation based on the first information and the configuration table.

In some embodiments, the first operation includes at least one of: adding a first identifier set configured in the first information, modifying a first identifier set configured in the first information, deleting a first identifier set configured in the first information, adding a second identifier set configured in the first information, modifying a second identifier set configured in the first information, and deleting a second identifier set configured in the first information.

In some embodiments, the terminal performs at least one of the following based on the first configuration table: adding a first identifier set and/or a second identifier set corresponding to the index; and modifying a first identifier set and/or a second identifier set corresponding to the index.

In some embodiments, the terminal, based on a second configuration table, performs at least one of the following: deleting the first identifier set and/or the second identifier set corresponding to the identifier.

Step S2103: The terminal determines a key-related operation.

In some embodiments, the terminal determines whether to update the key.

In some embodiments, the terminal generates a key.

In some embodiments, the terminal determines whether to update the key during a mobility operation.

In some embodiments, the terminal determines whether to update the key before, during, or after a mobility operation.

In some embodiments, the terminal generates a key during a mobility operation.

In some embodiments, the terminal generates a key before, during, or after a mobility operation.

In some embodiments, the terminal determines a key-related operation based on first information.

In some embodiments, the terminal determines not to update the key based on the first identifier set corresponding to the current serving primary secondary cell being the same as the first identifier set corresponding to the target primary secondary cell; where the target primary secondary cell is one of a candidate primary secondary cell or a secondary cell group.

In some embodiments, the terminal determines not to update the key based on the index corresponding to the current serving primary secondary cell being the same as the index corresponding to the target primary secondary cell.

In some embodiments, the terminal determines to update the key based on the first identifier set corresponding to the current serving primary secondary cell being different from the first identifier set corresponding to the target primary secondary cell.

In some embodiments, the terminal determines to update the key based on the index corresponding to the current serving primary secondary cell being different from the index corresponding to the target primary secondary cell.

In some embodiments, the terminal determines to generate a key based on the first identifier set corresponding to the current serving primary secondary cell being different from the first identifier set corresponding to the target primary secondary cell.

In some embodiments, the terminal determines to generate a key based on the index corresponding to the current serving primary secondary cell being different from the index corresponding to the target primary secondary cell.

In some embodiments, determining not to update the key includes determining not to update the key during or after performing a mobility operation.

In some embodiments, determining to update the key includes determining to update the key during or after performing a mobility operation.

In some embodiments, determining to generate a key includes determining to generate a key during or after performing a mobility operation.

In some embodiments, the SN identifier corresponding to the current serving primary secondary cell is the same as the SN identifier corresponding to the target primary secondary cell, and it is determined that the key will not be updated; where the target primary secondary cell is one of a candidate primary secondary cell or a secondary cell group.

In some embodiments, the SN identifier corresponding to the current serving primary secondary cell is different from the SN identifier corresponding to the target primary secondary cell, and it is determined that the key will be updated; where the target primary secondary cell is one of a candidate primary secondary cell or a secondary cell group.

In some embodiments, the SN identifier corresponding to the current serving primary secondary cell is different from the SN identifier corresponding to the target primary secondary cell, and it is determined that a key will be generated; where the target primary secondary cell is one of a candidate primary secondary cell or a secondary cell group.

In some embodiments, the SN identifier corresponding to the target primary secondary cell can be the identifier of the secondary node corresponding to the target primary secondary cell.

In some embodiments, the set number corresponding to the current serving primary secondary cell is the same as the set number corresponding to the target primary secondary cell, and it is determined that the key will not be updated; where the target primary secondary cell is one of a candidate primary secondary cell or a secondary cell group.

In some embodiments, the set number corresponding to the current serving primary secondary cell is different from the set number corresponding to the target primary secondary cell, and it is determined that the key will be updated; where the target primary secondary cell is one of a candidate primary secondary cell or a secondary cell group.

In some embodiments, the set number corresponding to the current serving primary secondary cells is different from the set number corresponding to the target primary secondary cells, and it is determined that a key will be generated; where the target primary secondary cell is one of a candidate primary secondary cell or a secondary cell group.

In some embodiments, the name of information, etc., is not limited to the name recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc. can be used interchangeably.

In some embodiments, the terms "acquire", "get", "obtain", "receive", "transmit", "bidirectional transmission" and "send and/or receive" are interchangeable and can be interpreted as receiving from other entities, acquiring from protocols, acquiring from higher layers, obtaining through self-processing, or autonomous implementation, etc.

In some embodiments, the terms such as "send", "transmit", "report", "distribute", "transfer", "bidirectional transmission", "send and/or receive", etc. are interchangeable.

In some embodiments, the terms such as "certain", "preset", "predetermined", "set", "indicated", "one", "any", "first", etc. are interchangeable. "Certain A", "preset A", "predetermined A", "set A", "indicated A", "one A", "any A" and "first A" can be interpreted as a pre-defined A in a protocol or the like, A obtained through setting, configuration, indication, etc., or a certain A, one A, any A, the first A, etc., but are not limited to these interpretations.

In some embodiments, the determination or judgment can be performed using a value represented by 1 bit (0 or 1), or by a true/false value (boolean), or by a numerical comparison (e.g., a comparison with a predetermined value), but it is not limited thereto.

The information processing method involved in the embodiments of the present disclosure may include at least one of steps S2101 to S2103. For example, step S2101 can be implemented as an independent embodiment; step S2102 can be implemented as an independent embodiment; step S2103 can be implemented as an independent embodiment; a combination of steps S2101 and S2103 can be implemented as an independent embodiment; a combination of steps S2102 and S2103 can be implemented as an independent embodiment; a combination of steps S2101 and S2103 can be implemented as an independent embodiment; a combination of steps S2101 to S2103 can be implemented as an independent embodiment.

In some embodiments, the order of step S2102 and step S2103 can be interchanged or performed simultaneously.

In some embodiments, steps S2102 and S2103 may be optional, and one or more of these steps may be omitted or substituted in different embodiments.

In some embodiments, steps S2101 and S2102 may be optional, and one or more of these steps may be omitted or substituted in different embodiments.

In some embodiments, steps S2101 and S2103 may be optional, and one or more of these steps may be omitted or substituted in different embodiments.

FIG. 3A is a schematic flowchart illustrating an information processing method according to an embodiment of the present disclosure. As shown in FIG. 3A, the embodiment of the present disclosure relates to an information processing method performed by a network device. The method includes:

Step S3101, sending first information.

Optional implementations of step S3101 can be found in the optional implementations of step S2101 in FIG. 2 and other related parts in the embodiments involved in FIG. 2, and will not be repeated here.

In some embodiments, the network device sends the first information to a terminal, but is not limited to this; it may also send the first information to other entities.

In some embodiments, the first information includes at least one of configuration information, indication information, and a configuration table.

In some embodiments, the first information includes at least one of configuration information and indication information; the configuration information may include a configuration table.

The information processing method involved in the embodiments of the present disclosure may include at least one of steps S3101 to S3102. For example, step S3101 may be implemented as an independent embodiment; step S3102 may be implemented as an independent embodiment; a combination of steps S3101 and S3102 may be implemented as an independent embodiment.

In some embodiments, step S3101 may be optional, and one or more of these steps may be omitted or substituted in different embodiments.

In some embodiments, step S3102 may be optional, and one or more of these steps may be omitted or substituted in different embodiments.

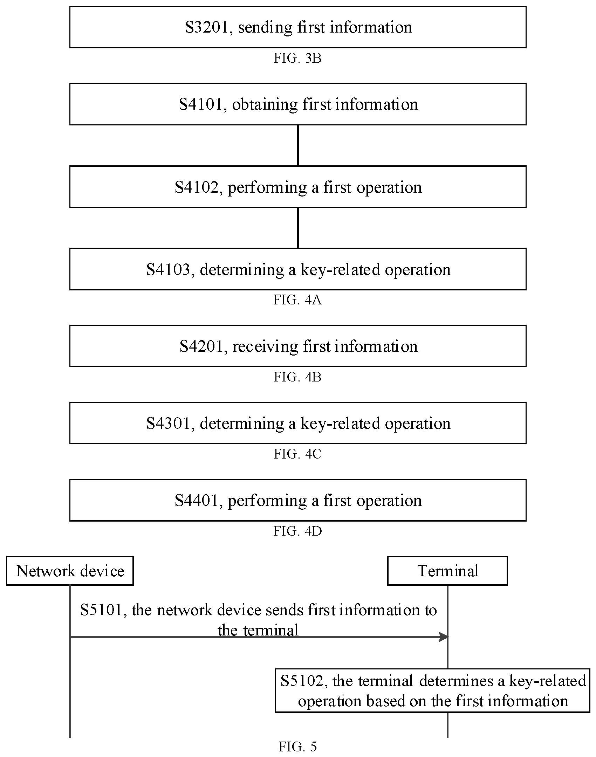

FIG. 3B is a schematic flowchart of an information processing method according to an embodiment of the present disclosure. As shown in FIG. 3B, the embodiments of the present disclosure relate to an information processing method performed by a network device. The method includes:

Step S3201, sending first information.

Optional implementations of step S3201 can be found in optional implementations of step S2101 of FIG. 2, or step S3101 of FIG. 3A, and other related parts in the embodiments involved in FIGs. 2 and 3A, which will not be repeated here.

Optionally, the first information is used by the terminal to determine a key-related operation.

In some embodiments, the key-related operation includes whether to update the key and/or generate a key.

In some embodiments, the first information used by the terminal to determine the key-related operation includes at least one of the following:

the first information is used by the terminal to determine the key-related operation when the terminal performs a mobility operation;

the first information is used by the terminal to determine the key-related operation after the terminal performs a mobility operation;

the first information is used by the terminal to determine the key-related operation when the terminal performs a mobility operation;

the first information is used by the terminal to determine the key-related operation after the terminal performs a mobility operation.

In some embodiments, the key is a key corresponding to the secondary node (SN).

In some embodiments, the mobility operation includes at least one of the following:

CHO;

CPAC, where CPAC includes CPA and/or CPC;

Subsequent CHO;

Subsequent CPAC, where Subsequent CPAC includes Subsequent CPA and/or Subsequent CPC;

LTM for a primary cell (PCell) or master cell group (MCG), where the LTM includes an initial LTM and/or a subsequent LTM;

LTM for a primary secondary cell (PSCell) or secondary cell group (SCG), where the LTM includes an initial LTM and/or a subsequent LTM.

In some embodiments, sending first information includes sending RRC signaling, where the RRC signaling carries the first information.

In some embodiments, the first information includes configuration information, where the configuration information is used to configure a first identifier set; where the first identifier set identifies a set of count values, and the count values are the values of a counter; the values of the counter are configured to generate a key corresponding to the SN.

In some embodiments, the configuration information includes at least one of the following:

an index and a first identifier set corresponding to the index;
an index, a first identifier set and an SN identifier corresponding to the index; the SN identifier is configured to identify a candidate SN;
an SN identifier and a first identifier set corresponding to the SN identifier.

In some embodiments, sending the first information includes one of the following:

sending at least one conditional reconfiguration configuration; where each conditional reconfiguration configuration carries first information, and the first information includes a first identifier set corresponding to the conditional reconfiguration configuration; where the conditional reconfiguration configuration is a mobility operation configuration;
sending multiple conditional reconfiguration configurations; where one first conditional reconfiguration configuration of the multiple conditional reconfiguration configurations carries first information, and the first information includes a first identifier set corresponding to the first conditional reconfiguration configuration; at least one second conditional reconfiguration configuration of the multiple conditional reconfiguration configurations carries first information, and the first information includes an SN identifier, an index, and/or a first configuration identifier; the first configuration identifier is configured to identify the first conditional reconfiguration configuration; the second conditional reconfiguration configuration is associated with the same candidate SN as the first conditional reconfiguration configuration.

In some embodiments, sending first information includes sending at least one conditional reconfiguration configuration, where the conditional reconfiguration configuration includes indication information; the conditional reconfiguration configuration is a mobility operation configuration;
where the indication information is configured to indicate an SN identifier and/or a first identifier set corresponding to the conditional reconfiguration configuration; the SN identifier is configured to identify a candidate SN, and the candidate SN includes at least one candidate primary secondary cell and/or a candidate secondary cell group.

In some embodiments, the indication information further includes at least one of the following:

first indication information, where the first indication information is configured to indicate an SN identifier corresponding to the conditional reconfiguration configuration;
second indication information, where the second indication information is configured to indicate a first identifier set corresponding to the conditional reconfiguration configuration and/or an index corresponding to the first identifier set;
third indication information, where the third indication information is configured to indicate a second configuration identifier; the second configuration identifier is configured to indicate a conditional reconfiguration configuration belonging to the same candidate SN as the conditional reconfiguration configuration.

In some embodiments, the first information includes:

at least one second identifier set, where the second identifier set includes one of the following:
an identifier of at least one candidate primary secondary cell;
an identifier of at least one secondary cell group;
at least one configuration identifier, where one configuration identifier is configured to indicate one conditional reconfiguration configuration.

In some embodiments, the indication information further includes fourth indication information, where the fourth indication information is configured to indicate at least one second identifier set corresponding to at least one set number.

In some embodiments, the fourth indication information includes an index and a set number corresponding to the index.

In some embodiments, the indication information further includes fifth indication information, where the fifth indication information is configured to indicate the association between the second identifier set and the first identifier set.

In some embodiments, the fifth indication information includes one of the following:

an index, and a first identifier set and a second identifier set corresponding to the index;
a first identifier set and a second identifier set.

In some embodiments, the network device configures multiple conditional reconfiguration configurations for a terminal, and the multiple conditional reconfiguration configurations correspond to multiple candidate SNs. Configuration information is used to configure a first identifier set for the candidate SN.

And/or, the network device configures multiple conditional reconfiguration configurations for a terminal, and the multiple conditional reconfiguration configurations correspond to multiple candidate SNs. Indication information includes first indication information.

And/or, the network device configures multiple conditional reconfiguration configurations for a terminal, and the multiple conditional reconfiguration configurations correspond to multiple candidate SNs. Indication information includes second indication information.

In some embodiments, the method includes sending a configuration table, where the configuration table includes a first configuration table and/or a second configuration table.

The first configuration table is configured to add at least one first identifier set, add at least one second identifier set, modify at least one first identifier set, and/or modify at least one second identifier set.

The second configuration table is configured to delete at least one first identifier set and/or delete at least one second identifier set.

In some embodiments, the first configuration table includes an index and a first identifier set corresponding to the index; and/or, the first configuration table includes an index and a second identifier set corresponding to the index; and/or, the second configuration table includes an index.

The above embodiments can be implemented individually or in combination. Optional implementations are shown in the optional implementations of the steps in FIGs. 2 and 3A, and will not be repeated here.

FIG. 4A is a flowchart illustrating an information processing method according to an embodiment of the present disclosure. As shown in FIG. 4A, the embodiment of the disclosure relates to an information processing method performed by a terminal. The method includes:
Step S4101, obtaining first information.

Optional implementations of step S4101 are shown in the optional implementations of step S2101 in FIG. 2, and other related parts in the embodiments involved in FIG. 2, and will not be repeated here.

In some embodiments, the terminal receives first information sent by a network device, but is not limited to this; it may also receive first information sent by other entities.

In some embodiments, the terminal obtains first information as specified by a protocol.

In some embodiments, the terminal obtains first information from a higher layer(s).

In some embodiments, the terminal processes to obtain the first information.

In some embodiments, step S4101 is omitted, and the terminal autonomously implements the function indicated by the first information, or the function is default or set by default.

In some embodiments, the first information includes at least one of configuration information, indication information, and a configuration table.

In some embodiments, the first information includes at least one of configuration information and indication information; the configuration information may include a configuration table.

Step S4102: performing a first operation.

Optional implementations of step S4102 can be found in the optional implementations of step S2102 in FIG. 2 and other related parts in the embodiments involved in FIG. 2, and will not be repeated here.

In some embodiments, the first operation is performed based on the configuration table.

In some embodiments, the first operation is determined based on the configuration table and the first information.

Step S4103: determining a key-related operation.

Optional implementations of step S4103 can be found in the optional implementations of step S2103 in FIG. 2 and other related parts in the embodiments involved in FIG. 2, and will not be repeated here.

In some embodiments, the key is determined based on the first information.

The information processing method involved in the embodiments of the present disclosure may include at least one of steps S4101 to S4103. For example, step S4101 can be implemented as an independent embodiment; step S4102 can be implemented as an independent embodiment; step S4103 can be implemented as an independent embodiment; a combination of steps S4101 and S4102 can be implemented as an independent embodiment; a combination of steps S4102 and S4103 can be implemented as an independent embodiment; a combination of steps S4101 and S4103 can be implemented as an independent embodiment; a combination of steps S4101 to S4103 can be implemented as an independent embodiment.

In some embodiments, the order of step S4102 and step S4103 can be interchanged or performed simultaneously.

In some embodiments, steps S4102 and S4103 may be optional, and one or more of these steps may be omitted or substituted in different embodiments.

In some embodiments, steps S4101 and S4102 may be optional, and one or more of these steps may be omitted or substituted in different embodiments.

In some embodiments, steps S4101 and S4103 may be optional, and one or more of these steps may be omitted or substituted in different embodiments.

FIG. 4B is a schematic flowchart illustrating an information processing method according to an embodiment of the present disclosure. As shown in FIG. 4B, the embodiment of the present disclosure relates to an information processing method performed by a terminal. The method includes:

Step S4201, receiving first information.

Optional implementations of step S4201 can be found in optional implementations of step S2101 of FIG. 2, or step S4101 of FIG. 4A, and other related parts in the embodiments involved in FIGs. 2 and 4A, which will not be repeated here.

In some embodiments, the first information is configured to determine a key-related operation.

In some embodiments, the key-related operation is determined based on the first information.

In some embodiments, the key-related operation includes whether to update a key and/or generate a key.

In some embodiments, determining the key-related operation based on first information includes one of the following:

determining the key-related operation during the execution of a mobility operation based on the first information;
determining the key-related operation after the execution of a mobility operation based on the first information;
determining the key-related operation during the execution of a mobility operation based on the first information;
determining the key-related operation after the execution of a mobility operation based on the first information.

In some embodiments in combination with the second aspect, in some embodiments, the key is a key corresponding to the SN.

In some embodiments, the mobility operation includes one of the following:

CHO;
CPAC, where the CPAC includes primary secondary cell addition CPA and/or primary secondary cell change CPC;
subsequent CHO;
subsequent CPAC, where the subsequent CPAC includes subsequent CPA and/or subsequent CPC;
mobility LTM for a primary cell or master cell group, where the LTM includes an initial LTM and/or a subsequent LTM;
LTM for a primary secondary cell or secondary cell group, where the LTM includes an initial LTM and/or a subsequent LTM.

In some embodiments, receiving the first information includes receiving RRC signaling, where the RRC signaling carries the first information.

In some embodiments, the first information includes configuration information, where the configuration information configures a first identifier set; where the first identifier set is configured to identify a set of count values, and the count values are values of a counter; the values of the counter are configured to generate the key corresponding to the SN.

In some embodiments, the configuration information includes at least one of the following:

an index and a first identifier set corresponding to the index;
an index, a first identifier set and an SN identifier corresponding to the index; the SN identifier is configured to identify a candidate SN; and
an SN identifier and a first identifier set corresponding to the SN identifier.

In some embodiments, receiving the first information includes one of the following:

receiving at least one conditional reconfiguration configuration; where each conditional reconfiguration configuration carries first information, and the first information includes a first identifier set corresponding to the conditional reconfiguration configuration; where the conditional reconfiguration configuration is a mobility operation configuration;
receiving multiple conditional reconfiguration configurations; where one first conditional reconfiguration configuration in the multiple conditional reconfiguration configurations carries first information, and the first information includes a first identifier set corresponding to the first conditional reconfiguration configuration; at least one second conditional reconfiguration configuration in the multiple conditional reconfiguration configurations carries first information, and the first information includes an SN identifier, an index, and/or a first configuration identifier; the first configuration identifier is configured to indicate the first conditional reconfiguration configuration; the second conditional reconfiguration configuration is associated with the same candidate SN as the first conditional reconfiguration configuration.

In some embodiments, receiving first information includes receiving at least one conditional reconfiguration configuration, where the conditional reconfiguration configuration includes indication information; the conditional reconfiguration configuration is a mobility operation configuration; where the indication information is configured to indicate an SN identifier and/or a first identifier set corresponding to the conditional reconfiguration configuration; the SN identifier is configured to identify a candidate SN, and the candidate SN includes at least one candidate primary secondary cell and/or a candidate secondary cell group.

In some embodiments, the indication information further includes at least one of the following:

first indication information, where the first indication information is configured to indicate an SN identifier corresponding to the conditional reconfiguration configuration;
second indication information, where the second indication information is configured to indicate a first identifier set corresponding to the conditional reconfiguration configuration and/or an index corresponding to the first identifier set;
third indication information, where the third indication information is configured to indicate a second configuration identifier; the second configuration identifier is configured to indicate a conditional reconfiguration configuration belonging to the same candidate SN as the conditional reconfiguration configuration.

In some embodiments, the first information includes:

at least one second identifier set, where the second identifier set includes one of the following:
an identifier of at least one candidate primary secondary cell;
an identifier of at least one secondary cell group;
at least one configuration identifier, where one configuration identifier is configured to indicate one conditional reconfiguration configuration.

In some embodiments, the indication information further includes fourth indication information, where the fourth indication information is configured to indicate at least one second identifier set corresponding to at least one set number.

In some embodiments, the fourth indication information includes an index and a set number corresponding to the index.

In some embodiments, the indication information further includes fifth indication information, where the fifth indication information is configured to indicate the association between the second identifier set and the first identifier set.

In some embodiments, the fifth indication information includes one of the following:

an index, and a first identifier set and a second identifier set corresponding to the index;
a first identifier set and a second identifier set.

In some embodiments, the network device configures multiple conditional reconfiguration configurations for a terminal, and the multiple conditional reconfiguration configurations correspond to multiple candidate SNs. Configuration information is used to configure a first identifier set for the candidate SN; and/or, the network device configures multiple conditional reconfiguration configurations for a terminal, and the multiple conditional reconfiguration configurations correspond to multiple candidate SNs, indication information includes first indication information; and/or, the network device configures multiple conditional reconfiguration configurations for a terminal, and the multiple conditional reconfiguration configurations correspond to multiple candidate SNs, the second indication information indicates one of these.

In some embodiments, the method includes receiving a configuration table, where the configuration table includes a first configuration table and/or a second configuration table.

The first configuration table is configured to add at least one first identifier set, add at least one second identifier set, modify at least one first identifier set, and/or modify at least one second identifier set.

The second configuration table is configured to delete at least one first identifier set and/or delete at least one second identifier set.

In some embodiments, the first configuration table includes an index and a first identifier set corresponding to the index; and/or, the first configuration table includes an index and a second identifier set corresponding to the index; and/or, the second configuration table includes an index.

In some embodiments, determining the key-related operation based on first information includes one of the following:

based on the first identifier set corresponding to the current serving primary secondary cell being the same as the first identifier set corresponding to the target primary secondary cell, determining not to update the key; where the target primary secondary cell is one of a candidate primary secondary cell or a secondary cell group;

based on the index corresponding to the current serving primary secondary cell being the same as the index corresponding to the target primary secondary cell, determining not to update the key;

based on the first identifier set corresponding to the current serving primary secondary cell being different from the first identifier set corresponding to the target primary secondary cell, determining to update the key;

based on the index corresponding to the current serving primary secondary cell being different from the index corresponding to the target primary secondary cell, determining to update the key;

based on the first identifier set corresponding to the current serving primary secondary cell being different from the first identifier set corresponding to the target primary secondary cell, determining to generate a key;

based on the index corresponding to the current serving primary secondary cell being different from the index corresponding to the target primary secondary cell, determining to generate a key.

In some embodiments, determining the key-related operation based on the first information includes one of the following:

the SN identifier corresponding to the current serving primary secondary cell is the same as the SN identifier corresponding to the target primary secondary cell, and it is determined not to update the key; where the target primary secondary cell is one of a candidate primary secondary cell or a secondary cell group;

the SN identifier corresponding to the current serving primary secondary cell is different from the SN identifier corresponding to the target primary secondary cell, and it is determined to update the key;

the SN identifier corresponding to the current serving primary secondary cell is different from the SN identifier corresponding to the target primary secondary cell, and it is determined to generate a key.

In some embodiments, determining the key-related operation based on the first information includes one of the following:

the set number corresponding to the current serving primary secondary cell is the same as the set number corresponding to the target primary secondary cell, and it is determined not to update the key; where the target primary secondary cell is one of a candidate primary secondary cell or a secondary cell group;

the set number corresponding to the current serving primary secondary cell is different from the set number corresponding to the target primary secondary cell, and it is determined to update the key;

the set number corresponding to the current serving primary secondary cell is different from the set number corresponding to the target primary secondary cell, and it is determined to generate a key.

The above embodiments can be implemented individually or in combination. Optional implementations can be found in the optional implementations of the steps in FIGs. 2 and 4A, which will not be repeated here.

FIG. 4C is a flowchart illustrating an information processing method according to an embodiment of the present disclosure. As shown in FIG. 4C, the embodiment of the present disclosure relates to an information processing method performed by a terminal. The method includes:

Step S4301, determining a key-related operation.

Optional implementations of step S4301 can be found in optional implementations of step S2103 in FIG. 2, or step S4103 in FIG. 4A, and other related parts in the embodiments of FIGs. 2 and 4A, which will not be repeated here.

The above embodiments can be implemented individually or in combination. Optional implementations can be found in the optional implementations of the steps in FIGs. 2 and 4A, which will not be repeated here.

FIG. 4D is a flowchart illustrating an information processing method according to an embodiment of the present disclosure. As shown in FIG. 4D, the embodiment of the present disclosure relates to an information processing method performed by a terminal. The method includes:

Step S4401, performing a first operation.

Optional implementations of step S4401 can be found in optional implementations of step S2102 of FIG. 2, or step S4102 of FIG. 4A, and other related parts in the embodiments involved in FIGs. 2 and 4A, which will not be repeated here.

The above embodiments can be implemented individually or in combination. Optional implementations can be found in the optional implementations of the steps in FIGs. 2 and 4A, which will not be repeated here.

FIG. 5 is a flowchart illustrating an information processing method according to an embodiment of the present disclosure. As shown in FIG. 5, the embodiment of the present disclosure relates to an information processing method for a communication system. The method includes:

Step S5101: The network device sends first information to the terminal.

Optional implementations of step S5101 can be found in optional implementations of step S2101 of FIG. 2, step S3101 of FIG. 3A, step S4101 of FIG. 4A, and other related parts in the embodiments involved in FIGs. 2, 3A, and 4A, which will not be repeated here.

Step S5102: The terminal determines a key-related operation based on the first information.

Optional implementations of step S5102 can be found in optional implementations of steps S2104 of FIG. 2, S4104 of FIG. 4A, and other related parts in the embodiments involved in FIGs. 2, 3A, and 4A, and will not be repeated here.

In some embodiments, the above method may include the methods described in the embodiments of the information processing system 100 side, network device side, terminal side, etc., and will not be repeated here.

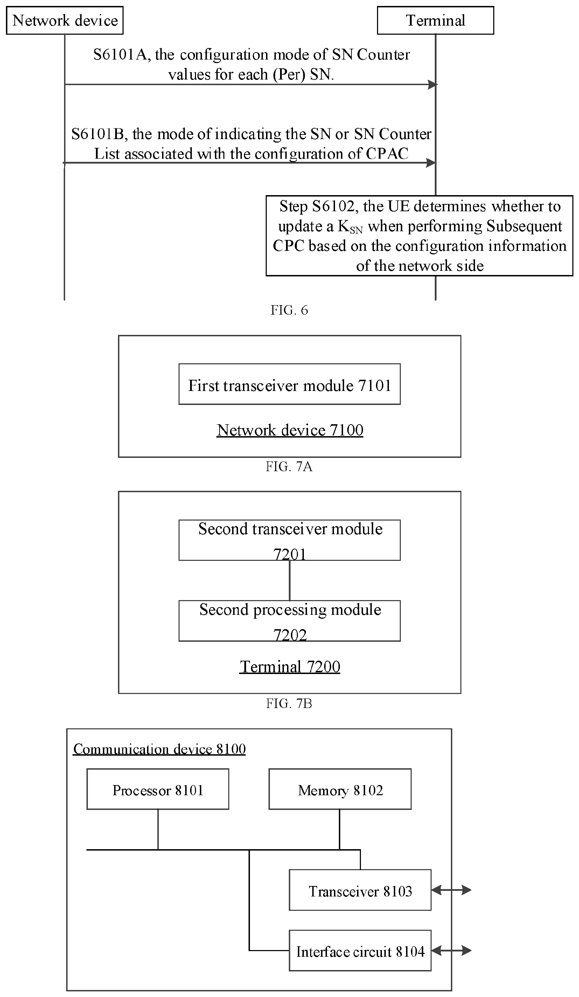

As shown in FIG. 6, the embodiment of the present disclosure provides an information processing method, including:

Step S6101A, the configuration mode of SN Counter values for each (Per) SN.

In some embodiments, a set of SN Counter values is configured for each SN, and each set of SN Counter values corresponds to an index, and the index is configured to indicate its corresponding SN. In some embodiments, the SN Counter values may be the first identifier set in the previous embodiments.

Step S6101B, the mode of indicating the SN or SN Counter List associated with the configuration of CPAC.

In some embodiments, the configuration of each CPAC includes indication information, and the indication information is configured to indicate the SN or SN Counter Values List associated with the candidate cell/cell group corresponding to the CPAC configuration.

In some embodiments, the network device configures a cell set indicating cells belonging to the same SN for the UE.

In some embodiments, multiple pre-configured SN Counter values are associated with a set of candidate cells belonging to the same SN, with each candidate SN associated with a set of SN Counter values.

In some embodiments, the UE can use AddMod List and Remove List to configure a set of SN Counter values and/or a corresponding set of Cells (a set of configurations) associated with one or more SNs. AddMod List and Remove List can be configuration tables from previous embodiments; where AddMod List is the first configuration table from previous embodiments; and Remove List is the second configuration table from previous embodiments.

In some embodiments, if the network configures a Subsequent CPAC for the UE, and if multiple subsequent CPACs correspond to multiple different candidate SNs, the network side needs to configure a set of SN Counter values for each SN and needs to indicate the SN/SN Counter values group corresponding to the CPAC configuration (or candidate cell/cell group).

In some embodiments, the conditional reconfiguration configuration can be the conditional reconfiguration configuration from previous embodiments.

In some embodiments, the CPAC configuration method is as follows:

the conditional reconfiguration configuration is used to configure CHOs and/or CPACs; the conditional reconfiguration configuration can be represented by IE ConditionalReconfiguration, and the IE ConditionalReconfiguration is configured to add, modify, and/or release a configuration such as the conditional reconfiguration, etc.

Each conditional reconfiguration configuration includes, but is not limited to, one or more of the following information: (CPAC is a conditional reconfiguration configuration; CPAC configuration is a conditional reconfiguration configuration, and each CPAC configuration corresponds to a candidate PSCell/SCG).

Conditional Reconfiguration (condReconfigId) (The identifier corresponding to the configuration of the conditional reconfiguration).

Conditional Execution Condition (condExecutionCond) (The execution condition that needs to be fulfilled in order to trigger the execution of a conditional reconfiguration for CHO, CPA, and intra-SN CPC without MN involvement or MN initiated inter-SN CPC).

RRC Conditional Reconfiguration (condRRCReconfig) (The RRC reconfiguration message to be applied when the condition(s) are fulfilled). This corresponds to the candidate cell/cell group configuration.

Conditional Execution Conditional Secondary Cell Group (condExecutionCondSCG) contains execution condition that needs to be fulfilled in order to trigger the execution of a conditional reconfiguration for SN initiated inter-SN CPC. The Meas IDs refer to the measConfig associated with the SCG.

In some embodiments, the conditional reconfiguration or the conditional reconfiguration configuration may further include explicit or implicit indication information to indicate whether the conditional reconfiguration configuration can be used for Subsequent CPC/CPA. For example, if a conditional reconfiguration configuration includes indication information of SN/SN Counter Values, it implicitly indicates that the conditional reconfiguration configuration can be used for Subsequent CPC/CPA.

For step S6101 above, at least one of the following may be included:

Case 1: The network side may send a set of SN Counter values Lists to the UE to configure an available SN Counter values List corresponding to each Candidate SN.

The set of SN Counter values Lists is sent to the UE via RRC signaling.

**EP 4 750 110 A1**

For example, the set of SN Counter values Lists is configured through conditional reconfiguration, and the corresponding configuration is included in the IE Conditional Reconfiguration.

An example specific format 1 is Table 1 in the previous embodiment.

An example specific format 2 is Table 2 in the previous embodiment.

An example specific format 3 is Table 3 in the previous embodiment.

Each SN Counter Value can be identified by a Sk-Counter, which can be an integer from 0 to 65535.

The index is an identifier corresponding to each SN Counter Value List, and each index corresponds to a Candidate SN.

SN1, SN2, and SNn are identifiers of the Candidate SNs.

Case 2: The corresponding SN Counter Value List is included in the conditional reconfiguration configuration.

(For example, the conditional reconfiguration configuration can be used for Subsequent CPAC).

For example, the corresponding SN Counter Value List is included in each conditional reconfiguration configuration.

For example, for multiple conditional reconfiguration configurations with the same SN, only one conditional reconfiguration configuration needs to include the corresponding SN Counter Value List; other conditional reconfiguration configurations corresponding to this SN need to include the Candidate SN identifier or index, or the configuration identifier corresponding to the conditional reconfiguration configuration containing the SN Counter Value List.

For step S6102 above, at least one of the following can be included:

Case 1: each conditional reconfiguration configuration includes indication information, and the indication information indicates the SN corresponding to the candidate cell/cell group corresponding to the conditional reconfiguration configuration or indicates the SN Counter Values List corresponding to the CPAC configuration.

For example, the conditional reconfiguration configuration can be used for Subsequent CPAC.

Implementation 1: each conditional reconfiguration configuration (CPAC configuration) includes first indication information, and the first indication information indicates the Candidate SN corresponding to the candidate PSCell/SCG of the CPAC.

In some embodiments, it indicates the Node ID corresponding to the Candidate SN, or other SN identifier configured to indicate this SN.

Implementation 2: each conditional reconfiguration configuration (CPAC configuration) includes second indication information, and the second indication information indicates the SN Counter Values List corresponding to the CPAC configuration.

In some embodiments, it indicates the Index corresponding to SN Counter Values List (also known as the Set ID corresponding to the SN Counter Values List), or other identifiers or IDs configured to indicate the SN Counter Values List. In some embodiments, the Set ID can be the set number from the previous embodiments.

Implementation 3: each conditional reconfiguration configuration (CPAC configuration) includes third indication information, and the third indication information indicates the Configuration ID List of other CPAC configurations associated with the same CPAC configuration.

Case 2: Multiple cell lists (CPAC configuration lists) are configured, and each cell list (CPAC configuration list) indicates the cell/CPAC configuration corresponding to the same SN.

The set of Cells Lists is sent to the UE via RRC signaling.

For example, the set of Cells Lists is configured through conditional reconfiguration configuration, as shown in Table 4 of the previous embodiments.

Implementation 1: Cellnx can be represented by Cell ID, and the Cell ID is an identifier of each candidate PSCell. For example, PCI, corresponding SSB Frequency.

Implementation 2: Cellnx can be represented by Cell Group ID, and the Cell Group ID is an identifier of each candidate SCG.

Implementation 3: Cellnx can be represented by the configuration identifier corresponding to the conditional reconfiguration configuration. The configuration identifier is the configuration identifier corresponding to each conditional reconfiguration configuration; the conditional reconfiguration configurations corresponding to configuration identifiers belonging to the same set are all associated with the same SN (SN Counter Values List).

In some embodiments, the Cells List can be the second identifier set in the previous embodiment.

Case 3: Multiple pre-configured SN Counter values are associated with a set of candidate cells belonging to the same SN, with each candidate SN associated with a set of SN Counter values.

The network can configure a set to associate the Cells List and the SN Counter values List.

An example specific Format 1 can be Table 5 in the previous embodiment.

An example specific Format 2 can be Table 6 in the previous embodiment.

Step S6102: The UE determines whether to update a $K_{SN}$ when performing Subsequent CPC based on the configuration information of the network side.

Step S6102A: if the SN Counter Value List corresponding to the current serving PSCell and the SN Counter Value List corresponding to the target PSCell are the same when the UE performs the Subsequent CPC, then it is not necessary to generate a new $K_{SN}$ using a new SN Counter. If the SN Counter Value List corresponding to the current serving PSCell and the SN Counter Value List corresponding to the target PSCell are different when the UE performs the Subsequent CPC, then it is necessary to generate a new $K_{SN}$ using a new SN Counter.

In some embodiments, based on the network configuring the current PSCell (or the current applied CPAC configuration) and the target PSCell (or the target configuration) to correspond to the identifier of the same SN Counter value list, or to be associated with the same SN Counter value list, it is not necessary to generate a new $K_{SN}$ using a new SN Counter; otherwise, it is necessary to generate a new $K_{SN}$.

Step S6102B: if the current serving PSCell and the target PSCell correspond to the same SN when the UE performs the Subsequent CPC, then there is no need to generate a new $K_{SN}$ using a new SN Counter; if the current serving PSCell and the target PSCell correspond to different SNs when the UE performs the Subsequent CPC, then a new $K_{SN}$ needs to be generated using a new SN Counter.

In some embodiments, based on the network configuring the identifier of the current PSCell (or the current applied CPAC configuration) and the target PSCell (or the target configuration) to correspond to the same SN, or to being associated with the same SN, there is no need to generate a new $K_{SN}$ using a new SN Counter; otherwise, a new $K_{SN}$ needs to be generated.

Step S6102C: if the current serving PSCell and the target PSCell belong to the same Set when the UE performs the Subsequent CPC, then there is no need to generate a new $K_{SN}$ using a new SN Counter; if the current serving PSCell and the target PSCell belong to different Sets when the UE performs the Subsequent CPC, then a new $K_{SN}$ needs to be generated using a new SN Counter.

In some embodiments, for steps S6101A and S6101B, the UE can configure one or more sets of SN Counter values and/or corresponding one or more sets of Cells (configuration of one or more sets of CPACs) using AddMod List and Remove List.

Each set of SN Counter values and/or each corresponding set of Cells (configuration of each set of CPACs) corresponds to one Index.

In some embodiments, the network side can use the Remove List to delete one or more sets of SN Counter values and/or corresponding one or more sets of Cell IDs (configuration IDs of one or more sets of CPACs) that have been configured by the UE. The UE simply needs to include the Index corresponding to the set to be deleted in the Remove List.

In some embodiments, the network side can utilize an Add/Mod List to add or modify one or more sets of SN Counter values and/or corresponding one or more sets of Cell IDs (configuration IDs of one or more sets of CPACs) that have already been configured for the UE. The UE carries the Index corresponding to the group to be added/modified and the content of the corresponding set (e.g., a set of SN Counter Values) in the Add/Mod List. If the same Index exists in the UE's existing configuration, this content replaces the original content; otherwise, a new set is added, with the corresponding Index and content configured in the Add/Mod List.

In some embodiments, for steps S6101A and S6101B, if the network configures a Subsequent CPAC for the UE, and multiple Subsequent CPACs correspond to multiple different Candidate SNs, the network side needs to configure a set of SN Counter values for each SN and needs to indicate the SN/SN Counter values List corresponding to the CPAC configuration (or candidate cell/cell group).

In some embodiments, the network device sends first information to the terminal, but is not limited to this; it can also send first information to other entities.

The information processing method involved in the embodiment of the present disclosure may include at least one of steps S6101 to S6102. For example, step S6101 may be implemented as an independent embodiment; step S6102 may be implemented as an independent embodiment; a combination of steps S6101 and S6102 may be implemented as an independent embodiment.

In some embodiments, step S6101 may be optional, and one or more of these steps may be omitted or substituted in different embodiments.

In some embodiments, step S6102 may be optional, and one or more of these steps may be omitted or substituted in different embodiments.

The embodiment of the present disclosure also provides a device for implementing any of the above methods. For example, a device is provided that includes units or modules for implementing the steps performed by the terminal in any of the above methods. Furthermore, another device is provided that includes units or modules for implementing the steps performed by the network device (e.g., access network device, core network functional node, core network device, etc.) in any of the above methods.

It should be understood that the division of the units in the above device is only a logical functional division. In actual implementation, they can be fully or partially integrated into a single physical entity, or they can be physically separated. Furthermore, the units in the device can be implemented by a processor calling software: for example, the device includes a processor connected to a memory containing computer instructions. The processor calls the computer instructions stored in the memory to implement any of the above methods or to implement the functions of the units in the above device. The processor can be, for example, a general-purpose processor, such as a Central Processing Unit (CPU) or a microprocessor, and the memory can be internal or external to the device. Alternatively, the units in the device can be implemented as hardware circuits. The functionality of some or all units can be achieved through the design of these hardware circuits, which can be understood as one or more processors. For example, in one implementation, the hardware circuit is an application-specific integrated circuit (ASIC). The functionality of some or all of the units is achieved through the design of the logical relationships between the components within the circuit. In another implementation, the hardware circuit can be implemented using a programmable logic device (PLD). Taking a field-programmable gate array (FPGA) as an example, it can include a large number of logic gates. The connection relationships between the logic gates are configured through a configuration file, thereby achieving the functionality of some or all of the units. All units of the above device can be implemented entirely through processor-invoked software, entirely through hardware circuits, or partially through processor-invoked software with the remaining parts implemented through hardware circuits.

**In the** embodiment of the present disclosure, the processor is a circuit with signal processing capability. In one implementation, the processor can be a circuit with instruction read and execute capabilities, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits. The logical relationships of the aforementioned hardware circuits are fixed or reconfigurable. For example, the processor is a hardware circuit implemented using an application-specific integrated circuit (ASIC) or a programmable logic device (PLD), such as an FPGA. In a reconfigurable hardware circuit, the process of the processor loading a configuration document and configuring the hardware circuit can be understood as the process of the processor loading instructions to implement the functions of some or all of the above units. Furthermore, it can also be a hardware circuit designed for artificial intelligence, which can be understood as an ASIC, such as a Neural Network Processing Unit (NPU), a Tensor Processing Unit (TPU), a Deep Learning Processing Unit (DPU), etc.

FIG. 7A is a schematic diagram of a structure of a network device provided in an embodiment of the present disclosure. As shown in FIG. 7A, the network device 7100 includes at least one of a first transceiver module 7101, etc. In some embodiments, the first transceiver module 7102 is configured to send first information. In some embodiments, the first transceiver module 7102 is configured to perform at least one of the receiving and/or sending steps, etc. (e.g., step S2101, etc., but not limited thereto) performed by the network device in any of the above methods, which will not be described in detail here.

FIG. 7B is a schematic diagram of a structure of a terminal provided in an embodiment of the present disclosure. As shown in FIG. 7B, the terminal 7200 includes at least one of a second transceiver module 7201 and a second processing module 7202, etc. In some embodiments, the second transceiver module 7201 is configured to receive first information; and the second processing module 7202 is configured to determine a key-related operation based on the first information. In some embodiments, the second transceiver module 7201 described above is configured to perform at least one of the sending and/or receiving steps, etc. (such as step S2101, etc., but not limited thereto) performed by the terminal in any of the above methods, which will not be described in detail here. In some embodiments, the second processing module 7202 described above is configured to perform at least one of the processing steps, etc. (such as step S2102 and/or step S2103, etc., but not limited thereto) performed by the terminal in any of the above methods, which will not be described in detail here.

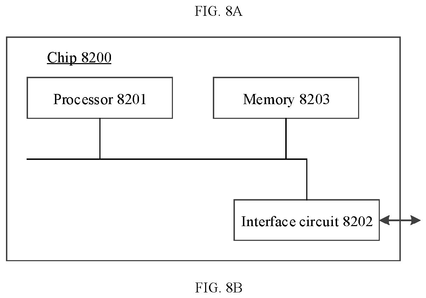

FIG. 8A is a schematic structural diagram of the communication device 8100 provided in an embodiment of the present disclosure. The communication device 8100 can be a network device (such as an access network device, a core network device), or the communication device 8100 can be a network device or terminal, etc., or the communication device 8100 also can be a chip, chip system, processor, etc. that supports the network device in implementing any of the above methods, or the communication device 8100 also can be a chip, chip system, processor, etc. that supports the terminal in implementing any of the above methods. The communication device 8100 can be configured to implement the methods described in the above method embodiments, and specific details can be found in the descriptions in the above method embodiments.

As shown in FIG. 8A, the communication device 8100 includes one or more processors 8101. The processor 8101 can be a general-purpose processor or a special-purpose processor, such as a baseband processor or a central processing unit (CPU). The baseband processor can be configured to process communication protocols and communication data, while the CPU can be configured to control communication devices (e.g., base stations, baseband chips, terminal devices, terminal device chips, DUs or CUs, etc.), execute programs, and process program data. The processor 8101 is configured to invoke instructions to cause the communication device 8100 to perform any of the above methods.

In some embodiments, the communication device 8100 further includes one or more memories 8102 for storing instructions. In some embodiments, all or part of the memories 8102 may be located outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving, etc. (e.g., at least one of steps S2101 to S2106, but not limited thereto) in the above-described method, and the processor 8101 performs at least one of other steps (e.g., at least one of steps S2101 to S2106, but not limited thereto).

In some embodiments, the transceiver may include a receiver and a transmitter, which may be separate or integrated. In some embodiments, the terms such as transceiver, transceiver unit, transceiver machine, transceiver circuit, etc., can be used interchangeably; the terms such as transmitter, transmitting unit, transmitting machine, transmitting circuit, etc., can be used interchangeably; and the terms such as receiver, receiving unit, receiving machine, receiving circuit, etc., can be used interchangeably.

In some embodiments, the communication device 8100 further includes one or more interface circuits 8104. The interface circuits 8104 are connected to the memory 8102 and can be configured to receive signals from the memory 8102 or other devices, and to send signals to the memory 8102 or other devices. For example, the interface circuit 8104 can read instructions stored in the memory 8102 and send those instructions to the processor 8101.

The communication device 8100 described in the above embodiments may be a network device or a first device, but the scope of the communication device 8100 described in the present disclosure is not limited thereto, and the structure of the communication device 8100 may not be limited to FIG. 8A. The communication device may be an independent device or may be part of a larger device. For example, the communication device may be: (1) an independent integrated circuit IC, or chip, or chip system or subsystem; (2) a collection of one or more ICs, optionally including storage components for storing data and computer programs; (3) an ASIC, such as a modem; (4) a module that can be embedded in other devices; (5) a receiver, terminal device, smart terminal device, cellular phone, wireless device, handheld device, mobile unit, vehicle device, network device, cloud device, artificial intelligence device, etc.; (6) others, etc.

FIG. 8B is a schematic diagram of a structure of chip 8200 provided in an embodiment of the present disclosure. For cases where the communication device 8100 can be a chip or a chip system, the schematic diagram of the structure of the chip 8200 shown in FIG. 8B can be referred to, but is not limited thereto.

The chip 8200 includes one or more processors 8201, and the chip 8200 is configured to perform any of the methods described above.

In some embodiments, the chip 8200 further includes one or more interface circuits 8202. The interface circuits 8202 are connected to the memory 8203. The interface circuit 8202 can be configured to receive signals from the memory 8203 or other devices, and the interface circuit 8202 can be configured to send signals to the memory 8203 or other devices. For example, the interface circuit 8202 can read instructions stored in the memory 8203 and send the instructions to the processor 8201.

In some embodiments, the interface circuit 8202 performs at least one of the communication steps such as sending and/or receiving, etc. in the above methods, and the processor 8201 performs at least one of the other steps.

In some embodiments, the terms such as interface circuit, interface, transceiver pin, transceiver, etc., can be used interchangeably.

In some embodiments, the chip 8200 further includes one or more memories 8203 for storing instructions. In some embodiments, all or part of the memories 8203 may be located outside the chip 8200.

The present disclosure also provides a storage medium storing instructions that, when executed on the communication device 8100, cause the communication device 8100 to perform any of the above methods. In some embodiments, the storage medium is an electronic storage medium. In some embodiments, the storage medium is a computer-readable storage medium, but not limited thereto; it may also be a storage medium readable by other devices. In some embodiments, the storage medium may be a non-transitory storage medium, but not limited thereto; it may also be a transitory storage medium.

The present disclosure also provides a program product that, when executed by the communication device 8100, causes the communication device 8100 to perform any of the above methods. In some embodiments, the program product is a computer program product.

The present disclosure also provides a computer program that, when executed on a computer, causes the computer to perform any of the above methods.

## Claims

1. An information processing method, comprising:
   sending first information by a network device, wherein the first information is used by a terminal to determine a key-related operation.

2. The method according to claim 1, wherein the key-related operation comprises at least one of:

   whether to update the key; and
   generating the key.

**3.** The method according to claim 1 or 2, wherein the first information being used by the terminal to determine the key-related operation comprises one of:

the first information is used by the terminal to determine the key-related operation during a mobility operation; or the first information is used by the terminal to determine the key-related operation after the terminal performs the mobility operation.

**4.** The method according to any one of claims 1 to 3, wherein the key is a key corresponding to a secondary node SN.

**5.** The method according to claim 3, wherein the mobility operation comprises at least one of:

conditional cell handover CHO;
conditional primary secondary cell addition or change CPAC, wherein the CPAC comprises primary secondary cell addition CPA and/or primary secondary cell change CPC;
subsequent CHO;
subsequent CPAC, wherein the subsequent CPAC comprises a subsequent CPA and/or a subsequent CPC;
Layer 1/Layer 2 triggered mobility LTM for a primary cell PCell or a master cell group MCG, wherein the LTM comprises an initial LTM and/or a subsequent LTM; and
LTM for a primary secondary cell PSCell or a secondary cell group SCG, wherein the LTM comprises the initial LTM and/or the subsequent LTM.

**6.** The method according to any one of claims 1 to 5, wherein sending the first information comprises:
sending radio resource control RRC signaling, wherein the RRC signaling carries the first information.

**7.** The method according to any one of claims 1 to 6, wherein the first information comprises:
configuration information, wherein the configuration information configures a first identifier set; the first identifier set is configured to identify a set of count values, the count values are values of a counter; the values of the counter are configured to generate a key corresponding to an SN.

**8.** The method according to claim 7, wherein the configuration information comprises at least one of:

an index, and the first identifier set corresponding to the index;
the index, the first identifier set and an SN identifier corresponding to the index; the SN identifier is configured to identify a candidate SN; and
the SN identifier, and the first identifier set corresponding to the SN identifier.

**9.** The method according to any one of claims 1 to 5, wherein sending the first information comprises one of:

sending at least one conditional reconfiguration configuration; wherein each conditional reconfiguration configuration carries the first information, the first information comprises a first identifier set corresponding to the conditional reconfiguration configuration; wherein the conditional reconfiguration configuration is a mobility operation configuration; or
sending multiple conditional reconfiguration configurations; wherein a first conditional reconfiguration configuration in the multiple conditional reconfiguration configurations carries the first information, the first information comprises a first identifier set corresponding to the first conditional reconfiguration configuration; at least one second conditional reconfiguration configuration in the multiple conditional reconfiguration configurations carries the first information, the first information comprises an SN identifier, an index, and/or a first configuration identifier; the first configuration identifier is configured to identify the first conditional reconfiguration configuration; the second conditional reconfiguration configuration is associated with the same candidate SN as the first conditional reconfiguration configuration.

**10.** The method according to any one of claims 1 to 8, wherein sending the first information comprises:

sending at least one conditional reconfiguration configuration, wherein the conditional reconfiguration configuration comprises indication information, and the conditional reconfiguration configuration is a mobility operation configuration;
wherein the indication information is configured to indicate an SN identifier and/or a first identifier set corresponding to the conditional reconfiguration configuration; the SN identifier is configured to identify a candidate SN, and the candidate SN comprises at least one candidate primary secondary cell and/or a candidate secondary cell group.

11. The method according to claim 10, wherein the indication information further comprises at least one of:

first indication information, wherein the first indication information is configured to indicate the SN identifier corresponding to the conditional reconfiguration configuration;
second indication information, wherein the second indication information is configured to indicate the first identifier set corresponding to the conditional reconfiguration configuration and/or an index corresponding to the first identifier set;
third indication information, wherein the third indication information is configured to indicate a second configuration identifier; the second configuration identifier is configured to indicate a conditional reconfiguration configuration belonging to the same candidate SN as the conditional reconfiguration configuration.

12. The method according to claim 10 or 11, wherein the first information comprises:
at least one second identifier set, wherein the second identifier set comprises one of:

an identifier of at least one candidate primary secondary cell;
an identifier of at least one secondary cell group;
at least one configuration identifier, wherein one configuration identifier is configured to indicate one conditional reconfiguration configuration.

13. The method according to claim 12, wherein the indication information further comprises:
fourth indication information, wherein the fourth indication information is configured to indicate at least one second identifier set corresponding to at least one set number.

14. The method according to claim 13, wherein the fourth indication information comprises: an index and a set number corresponding to the index.

15. The method according to claim 10 or 11, wherein the indication information further comprises:
fifth indication information, wherein the fifth indication information is configured to indicate an association between a second identifier set and the first identifier set.

16. The method according to claim 15, wherein the fifth indication information comprises one of:

an index, the second identifier set and the first identifier set corresponding to the index; or
the first identifier set and the second identifier set.

17. The method according to any one of claims 10 to 16, wherein the method comprises at least one of:

configuring, by the network device, multiple conditional reconfiguration configurations for the terminal, wherein the multiple conditional reconfiguration configurations correspond to multiple candidate SNs, and configuration information configures the first identifier set of the candidate SNs;
configuring, by the network device, the multiple conditional reconfiguration configurations for the terminal, wherein the multiple conditional reconfiguration configurations correspond to multiple candidate SNs, and the indication information comprises first indication information; and
configuring, by the network device, the multiple conditional reconfiguration configurations for the terminal, wherein the multiple conditional reconfiguration configurations correspond to multiple candidate SNs, and the indication information comprises second indication information.

18. The method according to any one of claims 1 to 17, wherein the method comprises: sending a configuration table, wherein the configuration table comprises a first configuration table and/or a second configuration table;

wherein the first configuration table is configured to add at least one first identifier set, add at least one second identifier set, modify at least one first identifier set, and/or modify at least one second identifier set;
the second configuration table is configured to delete at least one first identifier set and/or delete at least one second identifier set.

**19.** The method according to claim 18, wherein:

the first configuration table comprises an index and a first identifier set corresponding to the index; and/or,
the first configuration table comprises an index and a second identifier set corresponding to the index; and/or,
the second configuration table comprises an index.

**20.** An information processing method, comprising:

receiving, by a terminal, first information; and
determining, by the terminal, a key-related operation based on the first information.

**21.** The method according to claim 20, wherein the key-related operation comprises at least one of:

whether to update the key; and
generating the key.

**22.** The method according to claim 20 or 21, wherein determining the key-related operation based on the first information comprises one of:

determining the key-related operation during a mobility operation based on the first information; or
determining the key-related operation after the mobility operation based on the first information.

**23.** The method according to any one of claims 20 to 22, wherein the key is a key corresponding to a secondary node SN.

**24.** The method according to claim 22, wherein the mobility operation comprises one of:

conditional cell handover CHO;
conditional primary secondary cell addition or change CPAC, wherein the CPAC comprises primary secondary cell addition CPA and/or primary secondary cell change CPC;
subsequent CHO;
subsequent CPAC, wherein the subsequent CPAC comprises a subsequent CPA and/or a subsequent CPC;
Layer 1/Layer 2 triggered mobility LTM for a primary cell PCell or a master cell group MCG, wherein the LTM comprises an initial LTM and/or a subsequent LTM; or
LTM for a primary secondary cell PSCell or a secondary cell group SCG, wherein the LTM comprises the initial LTM and/or the subsequent LTM.

**25.** The method according to any one of claims 20 to 24, wherein receiving the first information comprises:
receiving radio resource control RRC signaling, wherein the RRC signaling carries the first information.

**26.** The method according to any one of claims 20 to 25, wherein the first information comprises:
configuration information, wherein the configuration information configures a first identifier set corresponding to at least one candidate SN; the first identifier set is configured to identify a set of count values; the count values are values of a counter configured to generate a key corresponding to the SN.

**27.** The method according to claim 26, wherein the configuration information comprises at least one of:

an index, and the first identifier set corresponding to the index;
the index, the first identifier set and an SN identifier corresponding to the index; the SN identifier is configured to identify a candidate SN; and
the SN identifier, and the first identifier set corresponding to the SN identifier.

**28.** The method according to any one of claims 20 to 24, wherein receiving the first information comprises one of:

receiving at least one conditional reconfiguration configuration; wherein each conditional reconfiguration configuration carries the first information, and the first information comprises a first identifier set corresponding to the conditional reconfiguration configuration; wherein the conditional reconfiguration configuration is a mobility operation configuration; or
receiving multiple conditional reconfiguration configurations; wherein a first conditional reconfiguration configuration in the multiple conditional reconfiguration configurations carries the first information, the first information comprises a first identifier set corresponding to the first conditional reconfiguration configuration; at least one second conditional reconfiguration configuration in the multiple conditional reconfiguration configurations carries the first information, the first information comprises an SN identifier, an index, and/or a first configuration identifier; the first configuration identifier is configured to identify the first conditional reconfiguration configuration; the second conditional reconfiguration configuration is associated with the same candidate SN as the first conditional reconfiguration configuration.

29. The method according to any one of claims 20 to 27, wherein receiving the first information comprises:

receiving at least one conditional reconfiguration configuration, wherein the conditional reconfiguration configuration comprises indication information; and the conditional reconfiguration configuration is a mobility operation configuration;

wherein the indication information is configured to indicate an SN identifier and/or a first identifier set corresponding to the conditional reconfiguration configuration; the SN identifier is configured to identify a candidate SN, and the candidate SN comprises at least one candidate primary secondary cell and/or a candidate secondary cell group.

30. The method according to claim 29, wherein the indication information further comprises at least one of:

first indication information, wherein the first indication information is configured to indicate the SN identifier corresponding to the conditional reconfiguration configuration;

second indication information, wherein the second indication information is configured to indicate the first identifier set corresponding to the conditional reconfiguration configuration and/or an index corresponding to the first identifier set;

third indication information, wherein the third indication information is configured to indicate a second configuration identifier; the second configuration identifier is configured to indicate a conditional reconfiguration configuration belonging to the same candidate SN as the conditional reconfiguration configuration.

31. The method according to claim 29 or 30, wherein the first information comprises:
at least one second identifier set, wherein the second identifier set comprises one of:

an identifier of at least one candidate primary secondary cell;
an identifier of at least one secondary cell group;
at least one configuration identifier, wherein one configuration identifier is configured to indicate one conditional reconfiguration configuration.

32. The method according to claim 31, wherein the indication information further comprises:
fourth indication information, wherein the fourth indication information is configured to indicate at least one second identifier set corresponding to at least one set number.

33. The method according to claim 32, wherein the fourth indication information comprises: an index and a set number corresponding to the index.

34. The method according to claim 29 or 30, wherein the indication information further comprises:
fifth indication information, wherein the fifth indication information is configured to indicate an association between a second identifier set and the first identifier set.

35. The method according to claim 34, wherein the fifth indication information comprises one of:

an index, the second identifier set and a first identifier set corresponding to the index; or
the first identifier set and the second identifier set.

36. The method according to any one of claims 29 to 35, wherein the method comprises at least one of:

configuring, by the network device, multiple conditional reconfiguration configurations for the terminal, wherein the multiple conditional reconfiguration configurations correspond to multiple candidate SNs, and configuration information configures the first identifier set of the candidate SNs;

configuring, by the network device, the multiple conditional reconfiguration configurations for the terminal, wherein the multiple conditional reconfiguration configurations correspond to multiple candidate SNs, and the indication information comprises first indication information; and

configuring, by the network device, the multiple conditional reconfiguration configurations for the terminal, wherein the multiple conditional reconfiguration configurations correspond to multiple candidate SNs, and the indication information comprises second indication information.

37. The method according to any one of claims 20 to 36, wherein the method comprises: receiving a configuration table, wherein the configuration table comprises a first configuration table and/or a second configuration table;

wherein the first configuration table is configured to add at least one first identifier set, add at least one second identifier set, modify at least one first identifier set and/or modify at least one second identifier set;
the second configuration table is configured to delete at least one first identifier set and/or delete at least one second identifier set.

38. The method according to claim 37, wherein

the first configuration table comprises an index and a first identifier set corresponding to the index; and/or,
the first configuration table comprises an index and a second identifier set corresponding to the index;
the second configuration table comprises an index.

39. The method according to any one of claims 20 to 38, wherein determining the key-related operation based on the first information comprises one of:

determining not to update the key based on a first identifier set corresponding to a current serving primary secondary cell being the same as a first identifier set corresponding to a target primary secondary cell; wherein the target primary secondary cell is one of a candidate primary secondary cell or a secondary cell group;
determining not to update the key based on an index corresponding to the current serving primary secondary cell being the same as an index corresponding to the target primary secondary cell;
determining to update the key based on the first identifier set corresponding to the current serving primary secondary cell being different from the first identifier set corresponding to the target primary secondary cell;
determining to update the key based on the index corresponding to the current serving primary secondary cell being different from the index corresponding to the target primary secondary cell;
determining to generate the key based on the first identifier set corresponding to the current serving primary secondary cell being different from the first identifier set corresponding to the target primary secondary cell; and
determining to generate the key based on the index corresponding to the current serving primary secondary cell being different from the index corresponding to the target primary secondary cell.

40. The method according to any one of claims 20 to 38, wherein determining the key-related operation based on the first information comprises one of:

an SN identifier corresponding to a current serving primary secondary cell being the same as an SN identifier corresponding to a target primary secondary cell, determining not to update the key; wherein the target primary secondary cell is one of a candidate primary secondary cell or a secondary cell group;
the SN identifier corresponding to the current serving primary secondary cell being different from the SN identifier corresponding to the target primary secondary cell, determining to update the key; and
the SN identifier corresponding to the current serving primary secondary cell being different from the SN identifier corresponding to the target primary secondary cell, determining to generate the key.

41. The method according to any one of claims 20 to 38, wherein determining the key based on the first information comprises one of:

a set number corresponding to a current serving primary secondary cell being the same as a set number corresponding to a target primary secondary cell, determining not to update the key; wherein the target primary secondary cell is one of a candidate primary secondary cell or a secondary cell group;
the set number corresponding to the current serving primary secondary cell being different from the set number corresponding to the target primary secondary cell, determining to update the key; or
the set number corresponding to the current serving primary secondary cell being different from the set number corresponding to the target primary secondary cell, determining to generate the key.

42. A network device, comprising:
    a first transceiver module configured to send first information, wherein the first information is used by a terminal to determine a key-related operation.

43. A terminal, comprising:

    a second transceiver module configured to receive first information; and
    a processing module configured to determine a key-related operation based on the first information.

44. A network device, comprising:

    one or more processors;
    wherein the network device is configured to perform the information processing method according to any one of claims 1 to 19.

45. A terminal, comprising:

    one or more processors;
    wherein the terminal is configured to perform the information processing method according to any one of claims 20 to 41.

46. A communication system, comprising: a network device and a terminal; wherein the network device is configured to implement the information processing method according to any one of claims 1 to 19, and the terminal is configured to implement the information processing method according to any one of claims 20 to 41.

47. A storage medium storing instructions, wherein when the instructions are executed on a communication device, the communication device is caused to perform the information processing method according to any one of claims 1 to 19 or any one of claims 20 to 41.

Information processing system 100

Terminal
101

Network device
102

FIG. 1A

MME/S-GW

MME/S-GW

EPC

S1-U

S1-U

S1-U

S1-U

en-gNB

S1

S1

S1

S1

en-gNB

E-UTRAN

X2-U

X2

X2

eNB

X2

eNB

FIG. 1B

AMF/UPF

AMF/UPF

5GC

NG

NG

NG

NG

gNB

NG

NG

NG

NG

gNB

NG-RAN

Xn

Xn

Xn

gNB

Xn

gNB

FIG. 1C

FIG. 1D

```
.......:
RRCReconfiguration-v1610-IEs ::=    SEQUENCE {.
.......:
  conditionalReconfiguration-r16       ConditionalReconfiguration-r16                    OPTIONAL, -- Need M.
    .......:
}.
```

FIG. 1E

```
-- ASN1START.
-- TAG-CONDITIONALRECONFIGURATION-START.
.:
ConditionalReconfiguration-r16 ::=   SEQUENCE {.
    attemptCondReconfig-r16            ENUMERATED {true}          OPTIONAL,   -- Cond CHO.
    condReconfigToRemoveList-r16        CondReconfigToRemoveList-r16  OPTIONAL,   -- Need N.
    condReconfigToAddModList-r16         CondReconfigToAddModList-r16  OPTIONAL,   -- Need N.
    ....:
}.
.:
CondReconfigToRemoveList-r16 ::=     SEQUENCE (SIZE (1..maxNrofCondCells-r16)) OF CondReconfigId-r16.
.:
-- TAG-CONDITIONALRECONFIGURATION-STOP.
-- ASN1STOP.
```

FIG. 1F

```
-- ASN1START.
-- TAG-CONDRECONFIGTOADDMODLIST-START.

CondReconfigToAddModList-r16 ::= SEQUENCE (SIZE (1.. maxNrofCondCells-r16)) OF CondReconfigToAddMod-r16.

CondReconfigToAddMod-r16 ::=        SEQUENCE {
    condReconfigId-r16                  CondReconfigId-r16,
    condExecutionCond-r16               SEQUENCE (SIZE (1..2)) OF MeasId                   OPTIONAL,    -- Need M.
    condRRCReconfig-r16                 OCTET STRING (CONTAINING RRCReconfiguration)          OPTIONAL,    -- Cond
condReconfigAdd
    ...,
    [[
    condExecutionCondSCG-r17           OCTET STRING (CONTAINING CondReconfigExecCondSCG-r17) OPTIONAL     -- Need M.
    ]]
},

CondReconfigExecCondSCG-r17 ::=  SEQUENCE (SIZE (1..2)) OF MeasId.

-- TAG-CONDRECONFIGTOADDMODLIST-STOP.
-- ASN1STOP.
```

FIG. 1G

```
-- ASN1START.
-- TAG-SKCOUNTER-START.

SK-Counter ::=  INTEGER (0..65535).

-- TAG-SKCOUNTER-STOP.
-- ASN1STOP.
```

FIG. 1H

| Network device | | Terminal |
| --- | --- | --- |

S2101, sending first information
(configuration information, indication information)

S2102, performing a first operation

S2103, determining a key-related operation

FIG. 2

S3101, sending first information

FIG. 3A

S3201, sending first information

FIG. 3B

S4101, obtaining first information

S4102, performing a first operation

S4103, determining a key-related operation

FIG. 4A

S4201, receiving first information

FIG. 4B

S4301, determining a key-related operation

FIG. 4C

S4401, performing a first operation

FIG. 4D

| Network device | | Terminal |
|---|---|---|

S5101, the network device sends first information to the terminal

S5102, the terminal determines a key-related operation based on the first information

FIG. 5

Network device — Terminal

S6101A, the configuration mode of SN Counter values for each (Per) SN.

S6101B, the mode of indicating the SN or SN Counter List associated with the configuration of CPAC

Step S6102, the UE determines whether to update a $K_{SN}$ when performing Subsequent CPC based on the configuration information of the network side

FIG. 6

First transceiver module 7101

Network device 7100

FIG. 7A

Second transceiver module 7201

Second processing module 7202

Terminal 7200

FIG. 7B

Communication device 8100

Processor 8101

Memory 8102

Transceiver 8103

Interface circuit 8104

FIG. 8A

Chip 8200

Processor 8201

Memory 8203

Interface circuit 8202

FIG. 8B

## INTERNATIONAL SEARCH REPORT

| International application No. |
|---|
| **PCT/CN2023/108262** |

| A. | CLASSIFICATION OF SUBJECT MATTER |
|---|---|
| | H04W 12/041(2021.01)i;  H04W 12/0433(2021.01)i;  H04W 12/04(2021.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNTXT; VEN; USTXT; WOTXT; EPTXT; CNKI: 主小区, 辅小区, 双连接, 载波聚合, 秘钥, 密钥, 生成, 更新, 标识, MCG, SCG, PCELL, SCELL, Primary, Secondary, cell, Dual connectivity, Carrier Aggregation, Key, Generate, Update, Identification

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 103959829 A (HUAWEI TECHNOLOGIES CO., LTD.) 30 July 2014 (2014-07-30) description, paragraphs [0233]-[0688], and figures 1-14 | 1-47 |
| X | CN 110637469 A (SAMSUNG ELECTRONICS CO., LTD.) 31 December 2019 (2019-12-31) description, paragraphs [0055]-[0134], and figures 1-8 | 1-47 |
| A | CN 113068183 A (DATANG MOBILE COMMUNICATIONS EQUIPMENT CO., LTD.) 02 July 2021 (2021-07-02) entire document | 1-47 |
| A | US 2019254097 A1 (NEC CORP.) 15 August 2019 (2019-08-15) entire document | 1-47 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 December 2023** | **01 February 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2023/108262** |

| Patent document cited in search report | | | Publication date (day/month/year) | Patent family member(s) | | | Publication date (day/month/year) |
| --- | --- | --- | --- | --- | --- | --- | --- |
| CN | 103959829 | A | 30 July 2014 | WO | 2015062097 | A1 | 07 May 2015 |
| | | | | US | 2016249210 | A1 | 25 August 2016 |
| | | | | US | 10735953 | B2 | 04 August 2020 |
| | | | | EP | 3057349 | A1 | 17 August 2016 |
| | | | | US | 2020267545 | A1 | 20 August 2020 |
| | | | | US | 11418325 | B2 | 16 August 2022 |
| | | | | EP | 3852413 | A1 | 21 July 2021 |
| | | | | US | 2022353059 | A1 | 03 November 2022 |
| CN | 110637469 | A | 31 December 2019 | KR | 20190142421 | A | 26 December 2019 |
| | | | | KR | 102445163 | B1 | 20 September 2022 |
| | | | | WO | 2018212539 | A1 | 22 November 2018 |
| | | | | GB | 201807843 | D0 | 27 June 2018 |
| | | | | GB | 2564530 | A | 16 January 2019 |
| | | | | GB | 2564530 | B | 05 August 2020 |
| | | | | US | 2021160692 | A1 | 27 May 2021 |
| | | | | US | 11445367 | B2 | 13 September 2022 |
| CN | 113068183 | A | 02 July 2021 | | None | | |
| US | 2019254097 | A1 | 15 August 2019 | WO | 2018079692 | A1 | 03 May 2018 |
| | | | | EP | 3534633 | A4 | 04 September 2019 |
| | | | | EP | 3534633 | A1 | 29 November 2023 |
| | | | | JPWO | 2018079692 | A1 | 19 September 2019 |
| | | | | JP | 6904363 | B2 | 14 July 2021 |

Form PCT/ISA/210 (patent family annex) (July 2022)